# EUROPEAN PATENT APPLICATION

(11) **EP 4 542 469 A1**
(43) Date of publication of application: **23.04.2025**
(21) Application number: 24202178.0
(22) Date of filing: 24.09.2024
(51) Int. Cl.: G06Q 10/06, G06Q 50/04

(54) **SYSTEMS AND METHODS FOR MANAGING EMISSIONS IN A FACILITY**

(30) Priority: 17.10.2023 US 202318380657
(71) Applicant: Honeywell International Inc., Charlotte, NC 28202 (US)
(72) Inventor: THAMBIDURAI, Rajapriyan, Charlotte, 28202 (US); KRISHNASAMY, Dhandapani, Charlotte, 28202 (US); BEEJADY, Sandhya, Charlotte, 28202 (US); SANKARANARAYANAN, Sridhar, Charlotte, 28202 (US)
(74) Representative: Haseltine Lake Kempner LLP

(57) **Abstract**

Various embodiments described herein relate to systems and methods for managing emissions in a facility. In this regard, a set point at which each asset of a plurality of assets is operating in the facility is determined. An emission level associated with each asset of the plurality of assets is determined as well. The emission level associated with each of the plurality of assets is correlated to determine if the correlated emission level exceeds a predefined threshold. If the correlated emission level exceeds the predefined threshold, one or more corrective actions for at least one asset is identified. Also, the one or more corrective actions are rendered on a display. An input is received from an operator that corresponds to a selection of one of a corrective action. Based on the corrective action, the at least one asset is operated at a first set point different from the set point.

## Description

### TECHNICAL FIELD

The present disclosure is related to management of emissions in a facility. More particularly, the present disclosure relates to integration of emission management with process control systems used in the facility.

### BACKGROUND

Generally, facilities such as industrial plants include numerous assets to perform one or more industrial processes. Manually managing such processes and assets is a cumbersome task. Accordingly, the facilities often incorporate process control systems to control such processes and assets. At times, the process control systems merely consider expected throughput of facilities to control various processes and assets. In this regard, the process control systems determine set points to operate the respective processes and assets. Said alternatively, day-in and day-out produce of the facilities is considered by the process control systems to determine set points. However, it should also be noted that different processes and assets in the facilities have associated emissions (for example, carbon emissions, greenhouse gas emissions, etc.,.). The aforementioned process control systems are often not integrated with emission levels to control the processes and assets. This deficiency leads to several challenges. For example, operation of the processes and assets at set points determined merely based on the throughput can lead to those emission levels which exceed limits set by emission regulations. This results in the facilities becoming non-compliant to the emission regulations. Further, it can also lead the facilities to pay heavy penalties for the same. In another aspect, the emissions can also be detrimental to environment and health of personnel in the facilities as well. Accordingly, these emissions can negatively impact environment and overall throughput leading to poor operations of the facilities.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
Figure 1 illustrates a schematic diagram showing a facility management system to manage multiple facilities in accordance with one or more example embodiments described herein.
Figure 2 illustrates a schematic diagram showing an exemplary facility in accordance with one or more example embodiments described herein.
Figure 3 illustrates a schematic diagram showing a framework of an Internet-of-Things (IoT) platform utilized in a facility management system in accordance with one or more example embodiments described herein.
Figure 4 illustrates a schematic diagram showing an implementation of a controller that may execute techniques in accordance with one or more example embodiments described herein.
Figure 5 illustrates a schematic diagram showing an exemplary implementation of a facility management system in a facility in accordance with one or more example embodiments described herein.
Figure 5A illustrates a schematic diagram showing an exemplary process control system in accordance with one or more example embodiments described herein.
Figure 5B illustrates a schematic diagram showing an exemplary emission management system in accordance with one or more example embodiments described herein.
Figure 6 illustrates a schematic diagram showing an exemplary user interface in accordance with one or more example embodiments described herein.
Figure 7 illustrates a flowchart showing a method described in accordance with some example embodiments described herein.
Figure 8 illustrates a flowchart showing a method described in accordance with some example embodiments described herein.
Figure 9 illustrates a flowchart showing a method described in accordance with some example embodiments described herein.
Figure 10 illustrates a flowchart showing a method described in accordance with some example embodiments described herein.
Figure 11 illustrates a flowchart showing a method described in accordance with some example embodiments described herein.
Figure 12 illustrates a flowchart showing a method described in accordance with some example embodiments described herein.

### SUMMARY

The details of some embodiments of the subject matter described in this specification are set forth in the accompanying drawings and the description below. Other features, aspects, and advantages of the subject matter will become apparent from the description, the drawings, and the claims.

In accordance with an example embodiment, a method for managing emissions in a facility is described herein. The method comprises identifying a set point at which each asset of a plurality of assets is operating in the facility. Further, the method comprises determining an emission level associated with each asset of the plurality of assets. Also, the method further comprises correlating the emission level associated with each of the plurality of assets. In this regard, the method comprises determining if the correlated emission level exceeds a predefined threshold. In response to determining that the correlated emission level exceeds the predefined threshold, the method further comprises identifying one or more corrective actions for at least one asset of the plurality of assets. In addition, the method further comprises rendering, on a display, the one or more corrective actions for the at least one asset. In this regard, the method comprises receiving an input from an operator, via the display, wherein the input corresponds to a selection of a corrective action from amongst the one or more corrective actions. Also, the method further comprises operating the at least one asset at a first set point based on the corrective action, wherein the first set point is different from the set point.

The above summary is provided merely for purposes of providing an overview of one or more exemplary embodiments described herein so as to provide a basic understanding of some aspects of the disclosure. Accordingly, it will be appreciated that the above-described embodiments are merely examples and should not be construed to narrow the scope or spirit of the disclosure in any way. It will be appreciated that the scope of the disclosure encompasses many potential embodiments in addition to those here summarized, some of which are further explained in the following description and its accompanying drawings.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### DETAILED DESCRIPTION OF THE DRAWINGS

Reference will now be made in detail to embodiments, examples of which are illustrated in the accompanying drawings. In the following detailed description, numerous specific details are set forth in order to provide a thorough understanding of the various described example embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments. The term "or" is used herein in both the alternative and conjunctive sense, unless otherwise indicated. The terms "illustrative," "example," and "exemplary" are used to be examples with no indication of quality level. Like numbers refer to like elements throughout.

The phrases "in an embodiment," "in one embodiment," "according to one embodiment," and the like generally mean that the particular feature, structure, or characteristic following the phrase can be included in at least one example embodiment of the present disclosure, and can be included in more than one example embodiment of the present disclosure (importantly, such phrases do not necessarily refer to the same example embodiment).

The word "exemplary" is used herein to mean "serving as an example, instance, or illustration." Any implementation described herein as "exemplary" is not necessarily to be construed as preferred or advantageous over other implementations. If the specification states a component or feature "can," "may," "could," "should," "would," "preferably," "possibly," "typically," "optionally," "for example," "often," or "might" (or other such language) be included or have a characteristic, that particular component or feature is not required to be included or to have the characteristic. Such component or feature can be optionally included in some example embodiments, or it can be excluded.

One or more example embodiments of the present disclosure may provide an "Internet-of-Things" or "IoT" platform in a facility that uses real-time accurate models and visual analytics to manage emissions in the facility. In addition, the platform provides analysis related to emission levels associated with assets in the facility and overall emission levels of the facility as well. The IoT platform is an extensible platform that is portable for deployment in any cloud or data center environment for providing an enterprise-wide, top to bottom view, displaying status of processes, assets, people, and/or safety. Further, the IoT platform of the present disclosure supports end-to-end capability to execute digital twins against process data to provide appropriate corrective actions related to the emission levels. With this, the assets can be operated at appropriate set points with reduced emission levels.

A facility such as an industrial plant often involves numerous assets to carry out a corresponding process in the facility. In general, process control systems are incorporated in the facility to control a process. Further, several assets are operated at set points defined by the process control systems to perform the process. For example, the process can correspond to production of tangible materials or finished products. In this regard, the assets can be required to handle one or more raw materials or intermediate products. In one example, if the industrial plant corresponds to a natural gas plant, then the assets can be required to handle materials such as hydrocarbons, carbon dioxide, hydrogen sulfide, nitrogen, and/or the like. In another example, if the industrial plant corresponds to a petroleum refinery, then the assets can be required to handle materials such as crude oil. When the assets handle such materials, there can be associated emissions too. The emissions can be, but not limited to carbon emissions, greenhouse gas emissions, etc., which are hazardous to personnel in the facility and environment as well. Often the process control systems and personnel in the facility merely consider throughput to determine the set points and do not consider associated emissions. That is, the assets are operated in a manner to meet or exceed throughput values without considering associated emissions. With this, the process control systems and personnel do not consider emission levels to operate the assets. Accordingly, this can result in unfavorable emissions from the facility.

Also, the process involves several workflows to convert raw materials to finished products. In this regard, not all workflows involve emissions whereas only few workflows may contribute to emissions. Per this aspect, assets which handle such workflows will be responsible for the emissions. So, overall emissions of the facility is dependent on contribution of emissions by each of such assets. At times, contribution to emissions by each asset is unknown under purview of the process control systems and personnel. For example, some emissions can be hidden (say, due to leakage, open flange, loose connections, unnecessary flare, aging of asset, and/or the like) or invisible that go undetected. With this, an impact of emissions associated with an asset on other assets in the facility stays unanswered. Accordingly, this inhibits the process control systems and personnel to take appropriate actions to manage emissions in the facility. For example, without the knowledge of emissions, the process control systems or personnel cannot alter set point of an asset. This leads to poor management of emissions in the facility resulting in fugitive emissions that impact safety of personnel and workspace of the facility.

Thus, to address the above challenges, various examples of systems and methods described herein relate to integration of emission management with process control system for managing emissions in a facility. In this regard, various example embodiments described herein facilitate the process control system used to control processes and/or assets in the facility to additionally manage emissions associated with each asset. Also, various example embodiments described herein correlate emissions associated with each asset to derive insights. Per this aspect, the systems and methods described herein receive information (such as, but not limited to currently operating set points of assets and corresponding emission levels) from sensors associated with the assets. Using this information, emission calculations are provided to analyze emission levels. Further, various example embodiments described herein translate the emission calculations to understandable insights around the emission levels. In one example, the insights can be reasons responsible for emissions such as, but not limited to leakage, open flange, loose connections, asset aging, requirement of service for an asset, set point at which an asset is operating, a type of material handled by an asset, current throughput of the facility, a process handled by an asset, impact of emissions on other assets, and/or the like. Whereas in another example, the insights can be opportunities or corrective actions for managing emissions such as, but not limited to modifying an overall throughput of the facility, changing set point of at least one asset, replacing at least one asset, servicing at least one asset in the facility, and/or the like. Yet in another example, the insights can be predictions related to emission levels of assets and/or the overall facility. The aforementioned exemplary insights facilitate the systems and methods described herein (for example, via process control system) to undertake relevant actions so as to efficiently manage the emissions in the facility.

In addition, the systems and methods described herein also render the insights on a display. For example, the display can be of a mobile device associated with an operator in the facility. The systems and methods described herein translate the emission calculations to understandable insights around the emission levels so that an operator even with minimal domain knowledge is able to understand and relate context of the insights. This facilitates the operator to make appropriate decisions and undertake relevant actions to manage emissions in the facility. With the insights, the emission levels of each asset and associated impacts on other assets clearly fall under purview of the process control system and the operator as well. In some situations, the operator can also apply their domain knowledge to additionally provide feedback on the insights rendered on the display so that the relevancy of insights can be improved. Also, various example embodiments described herein acts a tool that takes throughput of the facility as input and outputs appropriate emission calculations for the given throughput to provide insights. The insights can be, but not limited to set points at which assets are to be operated, emission levels associated with each asset, operation windows, and/or the like. With this, the set points and emissions come under operator's purview so that the operator can choose the best set points to operate assets with minimal emissions.

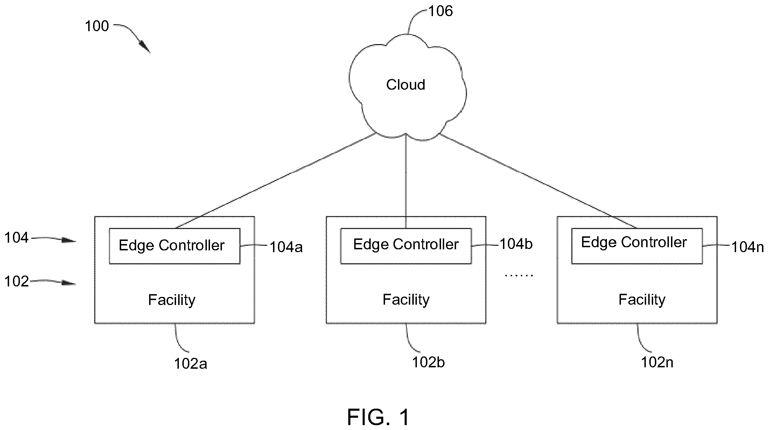

Figure 1 illustrates a schematic diagram showing a facility management system to manage multiple facilities in accordance with one or more example embodiments described herein. According to various example embodiments described herein, the exemplary facility management system 100 comprises one or more facilities 102a, 102b,....102n (collectively "facilities 102"). In this regard, a facility of the one or more facilities 102a, 102b,....102n may correspond to, for example, an industrial plant, a refinery, a factory, an industry, a corporate office, a logistics environment, an airport premises, a transportation hub, a material handling environment, a warehouse, a distribution center, a sortation center, a supply chain environment, a manufacturing unit, a pharmaceutical unit, a production plant, and/or the like. In some example embodiments, the one or more facilities 102a, 102b,....102n in the illustrative system 100 may be of same type. In some example embodiments, the one or more facilities 102a, 102b,....102n in the illustrative system 100 may be of different type. As it may be understood, in some example embodiments described herein, each of the facilities 102 often include one or more assets such as valves, pumps, compressors, pipelines, fans, turbines, machineries, controllers, and/or the like based on a nature of the facility. But generally, the one or more assets are operated to handle one or more processes in the facility. For example, if the facility corresponds to a production plant, then the one or more assets are operated to handle an industrial process. In some instances, the industrial process can correspond to a production process to produce tangible materials. However, at times, it should be noted that the process to produce tangible materials can lead to several fugitive emissions as well. There can be several factors responsible for such fugitive emissions. In an example, type of materials (say, hydrocarbons, carbon dioxide, hydrogen sulfide, nitrogen, aluminum, and/or the like) handled by the one or more assets are responsible for emissions. In another example, age of an asset, unserviced asset, leakages, loose connections, and/or the like are also responsible for emissions. Though these are few exemplary factors contributing to emissions, there can be several other factors too. As long as the emissions are detrimental and violate limits set by regulatory, it becomes necessary to identify factors contributing to emissions so that actions can be taken in a timely manner to manage the emissions.

Further, in one or more example embodiments described herein, each of the one or more facilities 102a, 102b,....102n includes a respective edge controller 104a, 104b,....104n (collectively "edge controllers 104"). Per this aspect, the edge controller of the respective facility collects data associated with the one or more assets in the facility. In accordance with some example embodiments, one or more sensors are employed in the facility to sense the data associated with the one or more assets. In this regard, the one or more sensors sense data such as current operating points or set points of the one or more assets, emission level associated with the one or more assets, a type of material handled by the one or more assets, a process that is handled by the one or more assets, and/or the like. In accordance with some example embodiments, the one or more sensors is communicatively coupled with the edge controller of the facility. Accordingly, the edge controller of the facility receives the data associated with the one or more assets via the one or more sensors. In addition, in some example embodiments, the edge controllers 104 process the data received from the one or more sensors to derive insights associated with each of the one or more assets. In this regard, the insights can be related to operating points, emission levels, and/or the like associated with each of the one or more assets. Also, in some example embodiments, the edge controllers 104 predict trends and/or undertake one or more corrective actions based at least on the derived insights to manage emissions of the facility.

Further, in some example embodiments, the one or more facilities 102a, 102b,....102n can be operably coupled with a cloud 106, meaning that communication between the cloud 106 and the one or more facilities 102a, 102b,....102n is enabled. In some example embodiments, the one or more edge controllers 104a, 104b,....104n can be communicatively coupled to the cloud 106. The cloud 106 may represent distributed computing resources, software, platform or infrastructure services which can enable data handling, data processing, data management, and/or analytical operations on the data exchanged & transacted amongst the facilities 102. In accordance with some example embodiments, the data collected by the edge controllers 104 is uploaded to the cloud 106 for processing. Further, in accordance with some example embodiments, the cloud 106 processes the data to determine operating points, emission levels, and/or the like associated with each of the one or more assets. In this regard, the cloud 106 also derives the insights associated with the operating points, emission levels, and/or the like. Also, in some example embodiments, the cloud 106 can generate one or more predictions and/or corrective actions based on the derived insights. Additionally, in some example embodiments, the cloud 106 can transmit the one or more predictions and/or corrective actions to a respective edge controller of the one or more edge controllers 104a, 104b,....104n in the facility. Also, in some example embodiments, the cloud 106 can transmit the insights, the one or more predictions and/or corrective actions to a mobile device associated with personnel in the facility.

In some example embodiments, the one or more edge controllers 104a, 104b,....104n may operate as intermediary node to transact data between a respective facility and/or the cloud 106. In some example embodiments, each of the one or more edge controllers 104a, 104b,....104n is capable of processing and/or filtering the collected data so as to be compatible with the cloud 106. In some example embodiments, each of the one or more facilities 102a, 102b,....102n may comprise a respective gateway to transact data between a respective facility and/or the cloud 106. Accordingly, in some example embodiments, gateway may operate as intermediary node to transact data between a respective facility and/or the cloud 106. In some example embodiments, the cloud 106 includes one or more servers that may be programmed to communicate with the one or more facilities 102a, 102b,....102n and to exchange data as appropriate. The cloud 106 may be a single computer server or may include a plurality of computer servers. In some example embodiments, the cloud 106 may represent a hierarchal arrangement of two or more computer servers, where perhaps a lower level computer server (or servers) processes telemetry data, for example, while a higher-level computer server oversees operation of the lower level computer server or servers.

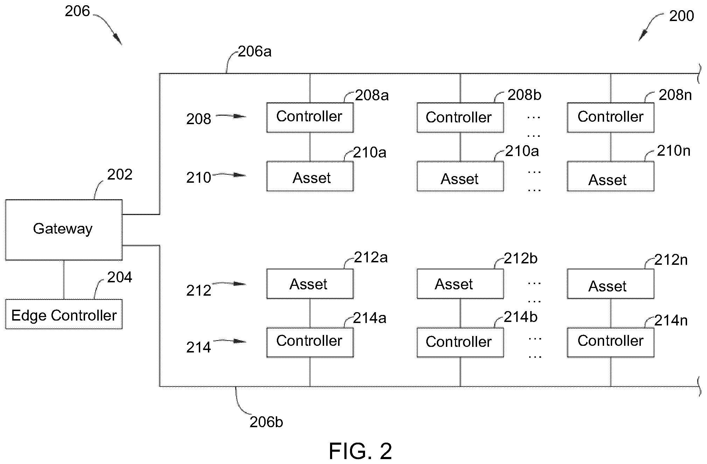

Figure 2 illustrates a schematic diagram showing an exemplary facility in accordance with one or more example embodiments described herein. In one or more example embodiments, an example facility 200 described herein corresponds to one of the facilities 102 described in accordance with Figure 1 of the current disclosure. In various example embodiments, the example facility 200 of Figure 2 comprises assets communicatively coupled via multiple networks 206 (e.g., communication channels). For instance, as illustrated in Figure 2, the facility 200 includes a first network 206a and a second network 206b. In some example embodiments, the facility 200 can include only a single network 206. In some example embodiments, the facility 200 can include multiple networks 206. Each of the networks 206 can include any available network infrastructure. In some example embodiments, each of the networks 206 can independently be, for example, a BACnet network, a NIAGARA network, a NIAGARA CLOUD network, or others. Accordingly, in some example embodiments, the facility 200 comprises a plurality of assets and/or devices in communication with a gateway 202 via corresponding communication channel (e.g., networks 206a and/or 206b). Said differently, each of the network represents a sub-network supported by an underlined network communication/IoT protocol and incorporating a cluster of endpoints (e.g. assets, controllers etc. in building facility).

In some example embodiments, one or more first assets 210a, 210b,...210n (collectively "first assets 210") are operably coupled to the first network 206a via one or more first controllers 208a, 208b,...208n (collectively "first controllers 208"). The first assets 210 represent a variety of different types of assets that can be found within the facility 200. In some example embodiments, at least some of the first assets 210 are, but not limited to actuators, valves, compressors, pumps, and/or the like. In some other example embodiments, the first controllers 208 are operably coupled to one or more sensors associated with different types of assets within the facility 200. In this regard, the one or more sensors can correspond to cameras, gas detectors, temperature sensors, pressure sensors, heat sensors, flow rate sensors, position sensors, and/or the like. Per this aspect, the one or more sensors sense telemetry data such as current operating points or set points, emission levels, a type of material handled, a process handled, and/or the like associated with the first assets 210. Further, in some example embodiments, the one or more sensors transmit the telemetry data to the first controllers 208. For example, a gas cloud imaging (GCI) camera can be used to sense emission data (say, gas speciation and concentration along with geospatial co-ordinates) associated with at least some of the first assets 210. In this regard, the gas cloud imaging (GCI) camera transmits the emission data to a corresponding first controller. In another example, a flow rate sensor can be used to detect an operating set point of a valve. In this regard, the flow rate sensor transmits the operating set point to a corresponding first controller.

In some example embodiments, the first controllers 208 control operation of at least one of the first assets 210. In this regard, the one or more first controllers 208a, 208b,...208n process and/or analyze the telemetry data to derive one or more insights for at least some of the first assets 210 in the facility 200. In this regard, the insights can be related to operating points, emission levels, and/or the like associated with at least some of the first assets 210. Also, in some example embodiments, the first controllers 208 predict trends and/or undertake one or more corrective actions based at least on the derived insights to control at least some of the first assets 210 and manage emissions of the facility 200. For example, a trend can correspond to a predicted emission trend of a particular gas in the facility 200. Whereas in another example, a corrective action can correspond to a modification of a set point of at least one asset of the first assets 210 in the facility 200. In accordance with some example embodiments, the one or more first controllers 208a, 208b,...208n can be built into one or more of the corresponding one or more first assets 210a, 210b,...210n, and need not be a separate component. Whereas, in accordance with some other example embodiments, the one or more first controllers 208a, 208b,...208n can be virtual controllers that may be implemented within a virtual environment hosted by one or more computing devices (not illustrated). Also, in some example embodiments, the one or more first controllers 208a, 208b,...208n can be containerized. In another example embodiment, at least some of the one or more first assets 210a, 210b,...210n can be controllers. In such case, the one or more first assets 210a, 210b,...210n need not have a separate corresponding controller of the one or more first controllers 208a, 208b,...208n.

In some example embodiments, one or more second assets 212a, 212b,...212n (collectively "second assets 212"), are operably coupled to the second network 206b via one or more second controllers 214a, 214b,...214n (collectively "second controllers 214"). The second assets 212 represent a variety of different types of assets that can be found within the facility 200. In some example embodiments, at least some of the second assets 212 are, but not limited to actuators, valves, compressors, pumps, and/or the like. In some other example embodiments, the second controllers 214 are operably coupled to one or more sensors associated with different types of assets within the facility 200. In this regard, the one or more sensors can correspond to cameras, gas detectors, temperature sensors, pressure sensors, heat sensors, flow rate sensors, position sensors, and/or the like. Per this aspect, the one or more sensors sense telemetry data such as current operating points or set points, emission levels, a type of material handled, a process handled, and/or the like associated with the second assets 212. Further, in some example embodiments, the one or more sensors transmit the telemetry data to the second controllers 214. For example, a gas cloud imaging (GCI) camera can be used to sense emission data (say, gas speciation and concentration along with geospatial co-ordinates) associated with at least some of the second assets 212. In this regard, the gas cloud imaging (GCI) camera transmits the emission data to a corresponding second controller. In another example, a flow rate sensor can be used to detect an operating set point of a valve. In this regard, the flow rate sensor transmits the operating set point to a corresponding second controller.

In some example embodiments, the second controllers 214 control operation of at least one of the second assets 212. In this regard, the one or more second controllers 214a, 214b,...214n processes and/or analyzes the telemetry data to derive one or more insights for at least some of the second assets 212 in the facility 200. In this regard, the insights can be related to operating points, emission levels, and/or the like associated with at least some of the second assets 212. Also, in some example embodiments, the second controllers 214 predict trends and/or undertake one or more corrective actions based at least on the derived insights to control at least some of the second assets 212 and manage emissions of the facility 200. For example, a trend can correspond to a predicted emission trend of a particular gas in the facility 200. Whereas in another example, a corrective action can correspond to a modification of a set point of at least one asset of the second assets 212 in the facility 200. In accordance with some example embodiments, the one or more second controllers 214a, 214b,...214n can be built into one or more of the corresponding one or more second assets 212a, 212b,...212n, and need not be a separate component. Whereas, in accordance with some other example embodiments, the one or more second controllers 214a, 214b,...214n can be virtual controllers that may be implemented within a virtual environment hosted by one or more computing devices (not illustrated). Also, in some example embodiments, the one or more second controllers 214a, 214b,...214n can be containerized. In another example embodiment, at least some of the one or more second assets 212a, 212b,...212n can be controllers. In such case, the one or more second assets 212a, 212b,...212n need not have a separate corresponding controller of the one or more second controllers 214a, 214b,...214n.

Further, in some example embodiments, the facility 200 includes a gateway 202 that is operably coupled with the first network 206a and the second network 206b. In one example embodiment, the gateway 202 can be operably coupled with the first network 206a but not with the second network 206b. In another example embodiment, the gateway 202 can be operably coupled with the second network 206b but not with the first network 206a. Accordingly, in some example embodiments, the gateway 202 is a legacy controller. In some example embodiments, the gateway 202 can be absent. In accordance with some example embodiments, an edge controller 204 is installed within the facility 200. In some example embodiments, the edge controller 204 can be operably coupled with the gateway 202. In this regard, the edge controller 204 serves as an intermediary node between the first controllers 208, the second controllers 214, and the cloud 106 (as described in accordance with Figure 1 of the current disclosure). For instance, in an example, the edge controller 204 can pull data from the first controllers 208 and the second controllers 214 and provide the data to the cloud 106. In an example embodiment, the edge controller 204 is configured to discover the first assets 210, the second assets 212, the first controllers 208, and/or the second controllers 214 that are connected along a local network such as the network 206. In an example embodiment, the network protocol of the network 206 includes discovery commands that, for example, are used to request that all assets connected to the network 206 identify themselves. Whereas, in another example, the edge controller 204 is configured to discover the first assets 210 and the second assets 212 regardless of an underlaying protocol supported by the first assets 210 and the second assets 212. In other words, the edge controller 204 can discover the first assets 210 and the second assets 212 supported by different protocols (e.g., BACnet, Modbus, LonWorks, SNMP, MQTT, Foxs, OPC UA etc.).

Further, in some example embodiments, the edge controller 204 interrogates any assets it finds operably coupled to the network 206 to obtain additional information from those assets that further helps the edge controller 204 and/or the cloud 106 identify the connected assets (such as, but not limited to actuators, valves, compressors, pumps), functionality of the assets, connectivity of the local controllers and/or the assets, types of operational data that is available from the local controllers and/or the assets, types of alarms that are available from the local controllers and/or the assets, and/or any other suitable information. For purpose of brevity, the additional information requested from the assets is referred interchangeably as, 'metadata', semantic data', or 'the model data', hereinafter throughout the description.

More generally, and in some example embodiments, the edge controller 204 is communicatively coupled to one or more assets, via one or more networks. For purpose of brevity, the term 'assets' is also referred interchangeably to as `data points', `end points', 'devices', 'sensors', or `electronic devices' throughout the description. According to various example embodiments described herein, the assets can be, for example, but not limited to, sensors, electronic components, pressure valves, HVACs, alarm units, building management systems, building controllers, industrial subsystems, industrial controllers, lightning systems, air detective systems, air quality sensors, etc. These may correspond to, for example, one or more of the first assets 210 and the second assets 212.

According to an example embodiment, the edge controller 204 is configured to receive at least one of, the telemetry data and model data from the one or more assets corresponding to various independent and diverse sub-systems in the facility 200 (e.g., but not limited to, a building, an industrial plant, a warehouse, a factory, etc.). The one or more assets correspond to various independent and diverse sub-systems in the facility 200. In some examples, the telemetry data can represent time-series data and may include a plurality of data values associated with the assets which can be collected over a period of time. For instance, in an example, the telemetry data may represent a plurality of sensor readings collected by a sensor over a period of time. Further, the model data can represent meta-data associated with the assets. The model data can be indicative of ancillary or contextual information associated with the asset. For instance, in an example, the model data can be representative of geographical information associated with the asset (e.g., location of the asset) within the facility 200. In another example, the model data can represent a sensor setting based on which a sensor is commissioned within a facility 200. In yet another example, the model data can be representative of a data type or a data format associated with the data transacted through the asset. In yet another example, the model data can be indicative of any information which can define a relationship of the asset with one or more other assets in the facility 200. In accordance with various example embodiments described herein, the term `model data' can be referred interchangeably as `semantic model' or 'metadata' for purpose of brevity.

In accordance with an example embodiment, the edge controller 204 is configured to discover and identify the one or more assets which are communicatively coupled to the edge controller 204. Further, upon identification of the assets, the example edge controller 204 is configured to pull the telemetry data and/or the model data from the various identified assets. In an example, these assets can correspond to one or more electronic devices that may be located on-premises in the facility 200. The edge controller 204 is configured to pull the data by sending one or more data interrogation requests to the one or more assets. These data interrogation requests can be based on a protocol supported by an underlying one or more assets.

In accordance with an example embodiment, the edge controller 204 is configured to receive the telemetry data and/or the model data in various data formats or different data structures. In an example, a format of the telemetry data and/or the model data, received at the edge controller 204 may be in accordance with a communication protocol of the network supporting transaction of data amongst two or more network nodes (i.e., the edge controller 204 and the asset). As can be appreciated, in some example embodiments, the various assets in the facility 200 can be supported by one or more of various network protocols (e.g., IOT protocols like BACnet, Modbus, LonWorks, SNMP, MQTT, Foxs, OPC UA etc.). Accordingly, and in some cases, the edge controller 204 is configured to pull the telemetry data and/or the model data, in accordance with communication protocol supported by the one or more asset.

In some example embodiments, the edge controller 204 is configured to process the received data and transform the data into a unified data format. The unified data format is referred hereinafter as a common object model. In an example, the common object model is in accordance with an object model that may be required by one or more data analytics applications or services, supported at the cloud 106. In some example embodiments, the edge controller 204 can perform data normalization to normalize the received data into a pre-defined data format. In an example, the pre-defined format can represent a common object model in which the edge controller 204 can further push the telemetry data and/or the model data to the cloud 106. In some example embodiments, the edge controller 204 is configured to establish a secure communication channel with the cloud 106. In this regard, the data can be transacted between the edge controller 204 and the cloud 106, via the secure communication channel. In some example embodiments, the edge controller 204 can send the data to the cloud 106 automatically at pre-defined time intervals. In some example embodiments, at least a part of the data can correspond to historic data. In some example embodiments, the edge controller 204 and/or the cloud 106 can derive the one or more insights associated in the facility 200 based on the common object model as well.

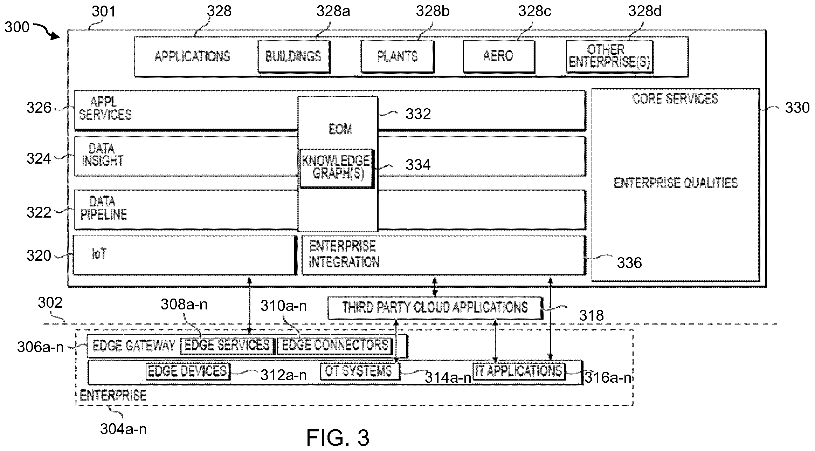

Figure 3 illustrates a schematic diagram showing a framework of an Internet-of-Things (IoT) platform utilized in a facility management system in accordance with one or more example embodiments described herein. The IoT platform 301 of the present disclosure is a platform used by facility management system that uses real-time accurate models and/or visual analytics to manage emissions in a facility to ensure sustained peak performance of the facility or enterprise 304a-304n. The IoT platform 301 is an extensible platform that is portable for deployment in any cloud or data center environment for providing an enterprise-wide, top to bottom view, displaying the status of processes, assets, people, and safety. Further, the IoT platform 301 supports end-to-end capability to execute digital twins against process data and to manage emissions of the enterprise, using the framework 300, detailed further below.

As shown in Figure 3, the framework 300 of the IoT platform 301 comprises a number of layers including, for example, an IoT layer 320, an enterprise integration layer 336, a data pipeline layer 322, a data insight layer 324, an application services layer 326, and an applications layer 328. The IoT platform 301 also includes a core services layer 330 and an extensible object model (EOM) 332 comprising one or more knowledge graphs 334. The layers 320-330 further include various software components that together form each layer 320-330. For example, in one or more embodiments, each layer 320-330 includes one or more of the modules, models, engines, databases, services, applications, or combinations thereof. In some embodiments, the layers 320-330 are combined to form fewer layers. In some embodiments, some of the layers 320-330 are separated into separate, more numerous layers. In some embodiments, some of the layers 320-330 are removed while others may be added.

The IoT platform 301 is a model-driven architecture. Also, in some example embodiments, the IoT platform 301 receives telemetry data from one or more assets (e.g., edge devices 312a-312n). In accordance with certain embodiments, the extensible object model (EOM) 332 communicates with each layer 320-330 to contextualize site data of the enterprise 304a-304n using an extensible object model (or "asset model") and knowledge graphs 334 where the one or more assets (e.g., edge devices 312a-312n) and processes of the facility or the enterprise 304a-304n are modeled. In an example embodiment, the edge devices 312a-312n may be one of the one or more assets as illustrated in Figures 1 and 2 of the current disclosure. The knowledge graphs 334 of EOM 332 are configured to store the models in a central location. The knowledge graphs 334 define a collection of nodes and links that describe real-world connections that enable smart systems. As used herein, a knowledge graph 334: (i) describes real-world entities (e.g., edge devices 312a-312n) and their interrelations organized in a graphical interface; (ii) defines possible classes and relations of entities in a schema; (iii) enables interrelating arbitrary entities with each other; and (iv) covers various topical domains. In other words, the knowledge graphs 334 define large networks of entities (e.g., edge devices 312a-312n), semantic types of the entities, properties of the entities, and relationships between the entities. Thus, the knowledge graphs 334 describe a network of "things" that are relevant to a specific domain, an enterprise, or a facility. Knowledge graphs 334 are not limited to abstract concepts and relations, but can also contain instances of objects, such as, for example, documents and datasets. In some example embodiments, the knowledge graphs 334 include resource description framework (RDF) graphs. As used herein, a "RDF graph" is a graph data model that formally describes the semantics, or meaning, of information. The RDF graph also represents metadata (e.g., data that describes data). In some example embodiments, the knowledge graphs 334 comprises data related to operating boundary and/or safety limits associated with each of the one or more assets. Whereas in some example embodiments, the knowledge graphs 334 comprises data related to emissions associated with each of the one or more assets in the facility and/or one or more emission calculations. Also, in some example embodiments, the knowledge graphs 334 comprises data related to standard emissions set by regulatory. In accordance with some example embodiments, the knowledge graphs 334 comprises one or more insights related to operating points, emission levels, and/or the like associated with each of the one or more assets. In this regard, the one or more insights of the knowledge graphs 334 can be reasons, opportunities, corrective actions, recommendations, and/or predictions associated with operations of the assets and/or processes so as to effectively manage emissions in the facility. Further, the knowledge graphs 334 can be used to create one or more service cases based at least on the one or more insights. According to various example embodiments, the knowledge graphs 334 also include a semantic object model. The semantic object model is a subset of a knowledge graph 334 that defines semantics for the knowledge graph 334. For example, the semantic object model defines the schema for the knowledge graph 334.

As used herein, EOM 332 is a collection of application programming interfaces (APIs) that enables seeded semantic object models to be extended. For example, the EOM 332 of the present disclosure enables a customer's knowledge graph 334 to be built subject to constraints expressed in the customer's semantic object model. Thus, the knowledge graphs 334 are generated by customers (e.g., enterprises or organizations) to create models of the edge devices 312a-312n using their corresponding data in the enterprise 304a-304n, and the knowledge graphs 334 are input into the EOM 332 for visualizing the models (e.g., the nodes and links). In some example embodiments, knowledge graphs 334 are input into the EOM 332 for visualizing overall emissions of the facility, emissions associated with each of the one or more assets in the facility, impact of emissions associated with an asset on the overall emissions of the facility, and/or the one or more insights.

The models describe the one or more assets (e.g., the nodes) of the enterprise (e.g., the edge devices 312a-312n) and describe the relationship between the one or more assets (e.g., the links). The models also describe the schema (e.g., describe what the data is), and therefore the models are self-validating. For example, in one or more embodiments, the model describes the type of sensors mounted on any given asset (e.g., edge device 312a-312n) and the type of data that is being sensed by each sensor. According to various embodiments, a key performance indicator (KPI) framework is used to bind properties of the assets in the extensible object model 332 to inputs of the KPI framework. Accordingly, the IoT platform 301 is an extensible, model-driven end-to-end stack including: two-way model sync and secure data exchange between the edge and the cloud, metadata driven data processing (e.g., rules, calculations, and aggregations), and model driven visualizations and applications. As used herein, "extensible" refers to the ability to extend a data model to include new emission data, new standard emission regulations, new rules, new properties, new columns, new fields, new classes, new tables, new operating levels of the one or more assets, new insights, and/or new relations. Thus, the IoT platform 301 is extensible with regards to edge devices 312a-312n and the applications that handle those devices 312a-312n. For example, when new edge devices are added to an enterprise 304a-304n system, the new devices will automatically appear in the IoT platform 301. In addition, the IoT platform 301 receives telemetry data from the new devices along with the existing edge devices 312a-312n. Accordingly, the IoT platform 301 has the capability to generate models associated operations and/or emissions for the new devices in near-real time based at least on the telemetry data. With this, the corresponding applications 328 can understand and use the data from the new devices to manage the new devices and/or processes in the facility or the enterprise 304a-304n to ensure effective management of emissions thereby increasing overall throughput of the facility.

In some cases, asset templates are used to facilitate configuration of instances of edge devices 312a-312n in the model using common structures. An asset template defines the typical properties or parameters for the edge devices 312a-312n of a given facility or enterprise 304a-304n for a certain type of device or asset. In this regard, some of the typical properties are static in nature. For example, an asset template of a pump includes modeling the pump having inlet and outlet pressures, speed, flow, etc. In other words, these properties such as pressure, speed, flow etc., for which the pump is configured to measure or sense is static. However, values or measurements sensed by the pump in real-time for the corresponding properties and/or emissions associated with the pump are dynamic in nature. Said alternatively, based on a process handled, a throughput of the enterprise 304a-304n, and/or a type of material handled by the pump, the measurements and/or the emissions vary dynamically. In this regard, the asset template of the pump can be dynamically updated in a timely manner. Also, it is to be noted that the templates can also include hierarchical or derived types of edge devices 312a-312n to accommodate variations of a base type of device 312a-312n. For example, a reciprocating pump is a specialization of a base pump type and would include additional properties in the template. Instances of the edge device 312a-312n in the model are configured to match the actual, physical devices of the enterprise 304a-304n using the templates to define expected attributes of the device 312a-312n. Each attribute is configured either as a static value (e.g., capacity is 1000 BPH) or with a reference to a time series tag that provides the value. The knowledge graph 334 can automatically map the tag to the attribute based on naming conventions, parsing, and matching the tag and attribute descriptions and/or by comparing the behavior of the time series data with expected behavior.

In certain example embodiments, the modeling phase includes an onboarding process for syncing the models between the edge and the cloud. In some example embodiments, the modeling phase can also include construction of the knowledge graph 334 using the telemetry data received from the one or more assets in the enterprise 304a-304n. For example, in one or more example embodiments, the onboarding process includes a simple onboarding process, a complex onboarding process, and/or a standardized rollout process. The simple onboarding process includes the knowledge graph 334 receiving raw model data from the edge and running context discovery algorithms to generate the model. The context discovery algorithms read the context of the edge naming conventions of the edge devices 312a-312n and determine what the naming conventions refer to. For example, in one or more example embodiments, the knowledge graph 334 receives "IMP" during the modeling phase and determines that "TMP" relates to "temperature". The generated models are then published. In certain example embodiments, the complex onboarding process includes the knowledge graph 334 receiving the raw model data, receiving point history data, and receiving site survey data. According to various example embodiments, the knowledge graph 334 then uses these inputs to run the context discovery algorithms. According to various example embodiments, the generated models are edited and then the models are published. The standardized rollout process includes manually defining standard models in the cloud and pushing the models to the edge.

The IoT layer 320 includes one or more components for device management, data ingest, and/or command/control of the edge devices 312a-312n. The components of the IoT layer 320 enable data to be ingested into, or otherwise received at, the IoT platform 301 from a variety of sources. For example, in one or more example embodiments, data is ingested from the edge devices 312a-312n through process historians or laboratory information management systems. The IoT layer 320 is in communication with the edge connectors 310a-310n installed on the edge gateways 306a-306n through network 302, and the edge connectors 310a-310n send the data securely to the IoT platform 301. In some example embodiments, the edge connectors 310a-310n can correspond to edge controller 204 described in accordance with Figure 2 of the current disclosure. In some example embodiments, only authorized data is sent to the IoT platform 301, and the IoT platform 301 only accepts data from authorized edge gateways 306a-306n and/or edge devices 312a-312n. According to various example embodiments, data is sent from the edge gateways 306a-306n to the IoT platform 301 via direct streaming and/or via batch delivery. In some example embodiments, the edge gateways 306a-306n can correspond to gateway 202 described in accordance with Figure 2 of the current disclosure. Further, after any network or system outage, data transfer will resume once communication is re-established and any data missed during the outage will be backfilled from the source system or from a cache of the IoT platform 301. According to various example embodiments, the IoT layer 320 also includes components for accessing time series, alarms and events, and transactional data via a variety of protocols.

The enterprise integration layer 336 includes one or more components for events/messaging, file upload, and/or REST/OData. The components of the enterprise integration layer 336 enable the IoT platform 301 to communicate with third party cloud applications 318, such as any application(s) operated by an enterprise in relation to its edge devices. For example, the enterprise integration layer 336 connects with enterprise databases, such as guest databases, customer databases, financial databases, patient databases, etc. The enterprise integration layer 336 provides a standard application programming interface (API) to third parties for accessing the IoT platform 301. The enterprise integration layer 336 also enables the IoT platform 301 to communicate with the OT systems 314a-314n and IT applications 316a-316n of the enterprise 304a-304n. Thus, the enterprise integration layer 336 enables the IoT platform 301 to receive data from the third-party applications 318 rather than, or in combination with, receiving the data from the edge devices 312a-312n directly. In accordance with some example embodiments, the enterprise integration layer 336 also enables the IoT platform 301 to receive feedback from personnel in the enterprise 304a-304n related to operations and/or emissions associated with the one or more assets.

The data pipeline layer 322 includes one or more components for data cleansing/enriching, data transformation, data calculations/aggregations, and/or API for data streams. Accordingly, in one or more example embodiments, the data pipeline layer 322 pre-processes and/or performs initial analytics on the received data. The data pipeline layer 322 executes advanced data cleansing routines including, for example, data correction, mass balance reconciliation, data conditioning, component balancing and simulation to ensure the desired information is used as a basis for further processing. In some example embodiments, the data pipeline layer 322 can process the feedback from personnel to identify new insights, new service cases, new tags, new properties, new columns, new fields, new classes, new tables, and new relations, etc., associated with operations and/or emissions of the one or more assets. The data pipeline layer 322 also provides advanced and fast computation capabilities. For example, in one or more example embodiments, cleansed data is run through enterprise-specific digital twins. According to various example embodiments, the enterprise-specific digital twins include a reliability advisor containing process models to determine the current operation and the fault models to trigger any early detection of faults and/or emissions in order to determine an appropriate resolution. According to various example embodiments, the digital twins also include an optimization advisor that integrates real-time economic data with real-time process and emission data, selects the right feed for a process, and determines optimal process conditions and product yields to effectively manage emissions in the enterprise 304a-304n.

According to various example embodiments, the data pipeline layer 322 employs models and templates to define calculations and analytics. In accordance with example embodiments, the data pipeline layer 322 employs models and templates to define how the calculations and analytics relate to the one or more assets (e.g., the edge devices 312a-312n). In one aspect, the calculations and analytics relate to operations associated with the one or more assets. For example, a calculation can relate to determination of a set point for a process variable of an asset. In another example, a calculation can relate to modification of a set point for a process variable of an asset. Yet in another example, a calculation can relate to determination of operation limits for a process variable of an asset. Whereas per another aspect, the calculations and analytics relate to emissions associated with the one or more assets. For example, a calculation can relate to determination of a particular type of emission associated with an asset. In another example, a calculation can relate to correlation of emission level associated with each of the one or more assets in the enterprise 304a-304n. Further, in another example, a calculation can relate to determination of emission levels that would be associated with each of the one or more assets for a given throughput of the enterprise 304a-304n. Yet in another example, a calculation can relate to determination of set points based on the emission levels that would be associated with each of the one or more assets. Also, in some example embodiments, a calculation can relate to modification of a set point for a process variable of an asset based on the correlation of emission level associated with each of the one or more assets. In some example embodiments, the data pipeline layer 322 also employs the calculations and analytics to predict trends associated with the operations and/or emissions associated with the one or more assets. For example, a fan template defines fan efficiency calculations such that every time a fan is configured, the standard efficiency calculation is automatically executed for the fan. In another example, a pump template outputs emission calculations such that every time a pump is configured to handle a particular process, the emission calculations is automatically outputted for the pump. The calculation model defines the various types of calculations, the type of engine that should run the calculations, the input and output parameters, the preprocessing requirement and prerequisites, the schedule, expected throughput, etc. According to various example embodiments, the actual calculation or analytic logic is defined in the template or it may be referenced. Thus, according to various example embodiments, the calculation model is employed to describe and control the execution of a variety of different process models and thereby operation of the one or more assets. According to various example embodiments, calculation templates are linked with the asset templates such that when an asset (e.g., edge device 312a-312n) instance is created, any associated calculation instances are also created with their input and output parameters, operating limits, admissible emission limits, and/or the like linked to the appropriate attributes of the asset (e.g., edge device 312a-312n). According to various example embodiments, the data pipeline layer 322 can identify one or more insights based on the calculations and analytics as well.

According to various example embodiments, the IoT platform 301 supports a variety of different analytics models including, for example, curve fitting models, regression analysis models, first principles models, empirical models, engineered models, user-defined models, machine learning models, built-in functions, and/or any other types of analytics models. Fault models and predictive maintenance models will now be described by way of example, but any type of models may be applicable.

Fault models are used to compare current and predicted enterprise 304a-304n performance to identify issues or opportunities, and the potential causes or drivers of the issues or opportunities. The IoT platform 301 includes rich hierarchical symptom-fault models to identify abnormal conditions and their potential consequences. For example, the IoT platform 301 can identify fugitive emissions associated with an asset in the enterprise 304a-304n as an abnormal condition. Further, in another example, the IoT platform 301 can determine and/or predict a potential consequence based on the fugitive emissions. Also, in another example, the IoT platform 301 can determine that an operating set point of an asset responsible for the fugitive emissions as an issue. Yet in another example, the IoT platform 301 can determine modification of operating set point of an asset to reduce the fugitive emissions as an opportunity. In this regard, in one or more embodiments, the IoT platform 301 drill downs from a high-level condition to understand the contributing factors, as well as determining the potential impact a lower level condition may have. There may be multiple fault models for a given enterprise 304a-304n looking at different aspects such as process, equipment, control, and/or operations. According to various example embodiments, each fault model identifies issues and opportunities in their domain, and can also look at the same core problem from a different perspective. According to various example embodiments, an overall fault model is layered on top to synthesize the different perspectives from each fault model into an overall assessment of the situation and point to the true root cause.

According to various example embodiments, when a fault or opportunity is identified, the IoT platform 301 provides one or more corrective actions and/or recommendations to be taken in the facility. Initially, the corrective actions and/or recommendations are based on expert knowledge that has been pre-programmed into the system by process and equipment experts. A recommendation services module presents this information in a consistent way regardless of source, and supports workflows to track, close out, and document the recommendation follow-up. According to various example embodiments, the recommendation follow-up is employed to improve the overall knowledge of the system over time as existing recommendations are validated (or not) or new cause and effect relationships are learned by users (for example, personnel in the facility) and/or analytics.

According to various example embodiments, the models are used to accurately predict what will occur before it occurs and interpret the status of the installed base. Thus, the IoT platform 301 enables operators to quickly initiate maintenance measures when irregularities (such as fugitive emissions, asset fault, and/or the like) occur. In some example embodiments, the one or more recommendations can be created to address the irregularities in the enterprise 304a-304n. According to various example embodiments, the digital twin architecture of the IoT platform 301 employs a variety of modeling techniques. According to various example embodiments, the modeling techniques include, for example, rigorous models, fault detection and diagnostics (FDD), descriptive models, predictive maintenance, prescriptive maintenance, process optimization, and/or any other modeling technique.

According to various example embodiments, the rigorous models are converted from process design simulation. In this manner, in certain example embodiments, process design is integrated with feed conditions. Process changes and technology improvement provide business opportunities that enable more effective maintenance schedule and deployment of resources in the context of production needs with minimal emissions. The fault detection and diagnostics include generalized rule sets that are specified based on industry experience and domain knowledge and can be easily incorporated and used working together with equipment models. According to various example embodiments, the descriptive models identifies a problem and the predictive models determines possible damage levels and maintenance options (say, to mitigate emissions). According to various example embodiments, the descriptive models include models for defining the operating windows and associated operating set points for the edge devices 312a-312n.

Predictive maintenance includes predictive analytics models developed based on rigorous models and statistic models, such as, for example, principal component analysis (PCA) and partial least square (PLS). According to various example embodiments, machine learning methods are applied to train models for fault prediction. According to various example embodiments, predictive maintenance leverages FDD-based algorithms to continuously monitor individual control and equipment performance. Predictive modeling is then applied to a selected condition indicator that deteriorates in time. Prescriptive maintenance includes determining an optimal maintenance option and when it should be performed based on actual conditions such as current operating points, current emission levels, etc., rather than time-based maintenance schedule. According to various example embodiments, prescriptive analysis selects the right solution based on the company's capital, operational, and/or other requirements to ensure minimal emissions. Process optimization is determining optimal conditions via adjusting set points and schedules. The optimized set points and schedules can be communicated directly to the underlying controllers, which enables automated closing of the loop from analytics to control.

The data insight layer 324 includes one or more components for time series databases (TDSB), relational/document databases, data lakes, blob, files, images, and videos, and/or an API for data query. According to various example embodiments, when raw data is received at the IoT platform 301, the raw data is stored as time series tags or events in warm storage (e.g., in a TSDB) to support interactive queries and to cold storage for archive purposes. According to various example embodiments, data is sent to the data lakes for offline analytics development. According to various example embodiments, the data pipeline layer 322 accesses the data stored in the databases of the data insight layer 324 to perform analytics, as detailed above.

The application services layer 326 includes one or more components for rules engines, workflow/notifications, KPI framework, insights (e.g., actionable insights), decisions, recommendations, machine learning, and/or an API for application services. The application services layer 326 enables building of applications 328a-d. The applications layer 328 includes one or more applications 328a-d of the IoT platform 301. For example, according to various example embodiments, the applications 328a-d includes a buildings application 328a, a plants application 328b, an aero application 328c, and other enterprise applications 328d. According to various example embodiments, the applications 328 includes general applications for portfolio management, asset management, autonomous control, and/or any other custom applications. According to various example embodiments, portfolio management includes the KPI framework and a flexible user interface (UI) builder. According to various example embodiments, asset management includes asset performance, asset health, and/or asset predictive maintenance. According to various example embodiments, autonomous control includes energy optimization and/or predictive maintenance. As detailed above, according to various example embodiments, the general applications 328a-d is extensible such that each application 328a-d is configurable for the different types of enterprises 304a-304n (e.g., buildings application 328a, plants application 328b, aero application 328c, and other enterprise applications 328d).

The applications layer 328 also enables visualization of performance of the enterprise 304a-304n. For example, dashboards provide a high-level overview with drill downs to support deeper investigations. In some example embodiments, the dashboards provide one or more insights related to operating points, emission levels, and/or the like associated with each of the one or more assets. In this regard, the dashboards provide one or more reasons or issues, opportunities, corrective actions, recommendations, predictions, and/or the like as the one or more insights. Also, the dashboards provide one or more service cases based at least on the one or more insights. The one or more insights give users prioritized actions to address current or potential issues and opportunities. For example, a prioritized action can be to modify throughput of the facility or modify a set point of an asset to reduce emission of a particular gas. In another example, a prioritized action can correspond to a set of ranked operating windows for operating the assets to mitigate emissions. Data analysis tools support ad hoc data exploration to assist in troubleshooting and process improvement.

The core services layer 330 includes one or more services of the IoT platform 301. According to various example embodiments, the core services 330 include data visualization, data analytics tools, security, scaling, and monitoring. According to various example embodiments, the core services 330 also include services for tenant provisioning, single login/common portal, self-service admin, UI library/UI tiles, identity/access/entitlements, logging/monitoring, usage metering, API gateway/dev portal, and the IoT platform 301 streams.

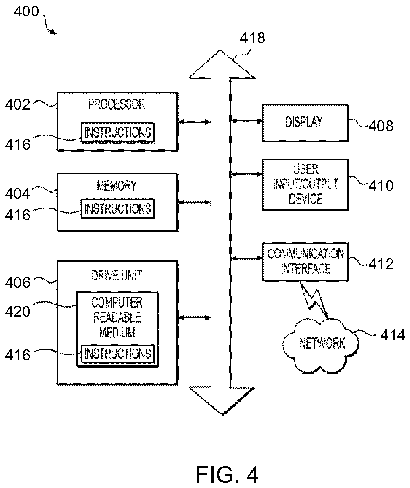

Figure 4 illustrates a schematic diagram showing an implementation of a controller that may execute techniques in accordance with one or more example embodiments described herein. The controller 400 may include a set of instructions that can be executed to cause the controller 400 to perform any one or more of the methods or computer based functions disclosed herein. The controller 400 may operate as a standalone device or may be connected, e.g., using a network, to other computer systems or peripheral devices.

In a networked deployment, the controller 400 may operate in the capacity of a server or as a client in a server-client user network environment, or as a peer computer system in a peer-to-peer (or distributed) network environment. The controller 400 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the controller 400 can be implemented using electronic devices that provide voice, video, or data communication. Further, while the controller 400 is illustrated as a single system, the term "system" shall also be taken to include any collection of systems or sub-systems that individually or jointly execute a set, or multiple sets, of instructions to perform one or more computer functions.

As illustrated in Figure 4, the controller 400 may include a processor 402, e.g., a central processing unit (CPU), a graphics processing unit (GPU), or both. The processor 402 may be a component in a variety of systems. For example, the processor 402 may be part of a standard computer. The processor 402 may be one or more general processors, digital signal processors, application specific integrated circuits, field programmable gate arrays, servers, networks, digital circuits, analog circuits, combinations thereof, or other now known or later developed devices for analyzing and processing data. The processor 402 may implement a software program, such as code generated manually (i.e., programmed).

The controller 400 may include a memory 404 that can communicate via a bus 418. The memory 404 may be a main memory, a static memory, or a dynamic memory. The memory 404 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 404 includes a cache or random-access memory for the processor 402. In alternative implementations, the memory 404 is separate from the processor 402, such as a cache memory of a processor, the system memory, or other memory. The memory 404 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 404 is operable to store instructions executable by the processor 402. The functions, acts or tasks illustrated in the figures or described herein may be performed by the processor 402 executing the instructions stored in the memory 404. The functions, acts or tasks are independent of the particular type of instructions set, storage media, processor or processing strategy and may be performed by software, hardware, integrated circuits, firmware, micro-code and the like, operating alone or in combination. Likewise, processing strategies may include multiprocessing, multitasking, parallel processing and the like.

As shown, the controller 400 may further include a display 408, such as a liquid crystal display (LCD), an organic light emitting diode (OLED), a flat panel display, a solid-state display, a cathode ray tube (CRT), a projector, a printer or other now known or later developed display device for outputting determined information. The display 408 may act as an interface for the user to see the functioning of the processor 402, or specifically as an interface with the software stored in the memory 404 or in the drive unit 406.

Additionally or alternatively, the controller 400 may include an input/output device 410 configured to allow a user to interact with any of the components of controller 400. The input/output device 410 may be a number pad, a keyboard, or a cursor control device, such as a mouse, or a joystick, touch screen display, remote control, or any other device operative to interact with the controller 400.

The controller 400 may also or alternatively include drive unit 406 implemented as a disk or optical drive. The drive unit 406 may include a computer-readable medium 420 in which one or more sets of instructions 416, e.g. software, can be embedded. Further, the instructions 416 may embody one or more of the methods or logic as described herein. The instructions 416 may reside completely or partially within the memory 404 and/or within the processor 402 during execution by the controller 400. The memory 404 and the processor 402 also may include computer-readable media as discussed above.

In some systems, a computer-readable medium 420 includes instructions 416 or receives and executes instructions 416 responsive to a propagated signal so that a device connected to a network 414 can communicate voice, video, audio, images, or any other data over the network 414. Further, the instructions 416 may be transmitted or received over the network 414 via a communication port or interface 412, and/or using a bus 418. The communication port or interface 412 may be a part of the processor 402 or may be a separate component. The communication port or interface 412 may be created in software or may be a physical connection in hardware. The communication port or interface 412 may be configured to connect with a network 414, external media, the display 408, or any other components in controller 400, or combinations thereof. The connection with the network 414 may be a physical connection, such as a wired Ethernet connection or may be established wirelessly as discussed below. Likewise, the additional connections with other components of the controller 400 may be physical connections or may be established wirelessly. The network 414 may alternatively be directly connected to a bus 418.

While the computer-readable medium 420 is shown to be a single medium, the term "computer-readable medium" may include a single medium or multiple media, such as a centralized or distributed database, and/or associated caches and servers that store one or more sets of instructions. The term "computer-readable medium" may also include any medium that is capable of storing, encoding, or carrying a set of instructions for execution by a processor or that cause a computer system to perform any one or more of the methods or operations disclosed herein. The computer-readable medium 420 may be non-transitory, and may be tangible.

The computer-readable medium 420 can include a solid-state memory such as a memory card or other package that houses one or more non-volatile read-only memories. The computer-readable medium 420 can be a random-access memory or other volatile re-writable memory. Additionally or alternatively, the computer-readable medium 420 can include a magnetooptical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated hardware implementations, such as application specific integrated circuits, programmable logic arrays and other hardware devices, can be constructed to implement one or more of the methods described herein. Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The controller 400 may be connected to a network 414. The network 414 may define one or more networks including wired or wireless networks. The wireless network may be a cellular telephone network, an 802.11, 802.16, 802.20, or WiMAX network. Further, such networks may include a public network, such as the Internet, a private network, such as an intranet, or combinations thereof, and may utilize a variety of networking protocols now available or later developed including, but not limited to TCP/IP based networking protocols. The network 414 may include wide area networks (WAN), such as the Internet, local area networks (LAN), campus area networks, metropolitan area networks, a direct connection such as through a Universal Serial Bus (USB) port, or any other networks that may allow for data communication. The network 414 may be configured to couple one computing device to another computing device to enable communication of data between the devices. The network 414 may generally be enabled to employ any form of machine-readable media for communicating information from one device to another. The network 414 may include communication methods by which information may travel between computing devices. The network 414 may be divided into sub-networks. The sub-networks may allow access to all of the other components connected thereto or the sub-networks may restrict access between the components. The network 414 may be regarded as a public or private network connection and may include, for example, a virtual private network or an encryption or other security mechanism employed over the public Internet, or the like.

In accordance with various implementations of the present disclosure, the methods described herein may be implemented by software programs executable by a computer system. Further, in an exemplary, non-limited implementation, implementations can include distributed processing, component/object distributed processing, and parallel processing. Alternatively, virtual computer system processing can be constructed to implement one or more of the methods or functionality as described herein.

Although the present specification describes components and functions that may be implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the steps of methods discussed are performed in one embodiment by an appropriate processor (or processors) of a processing (i.e., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

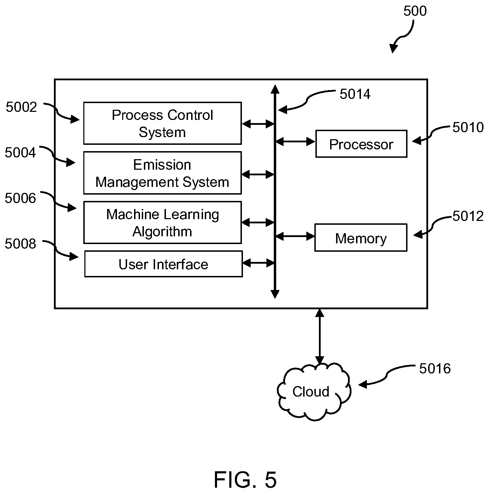

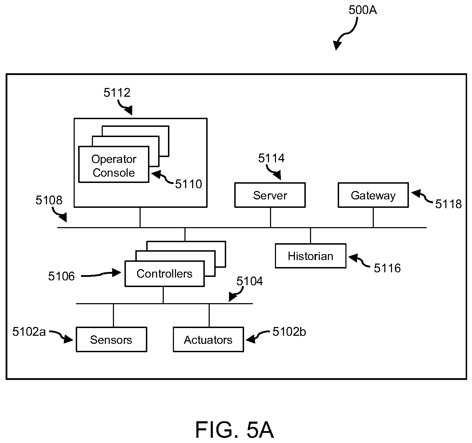

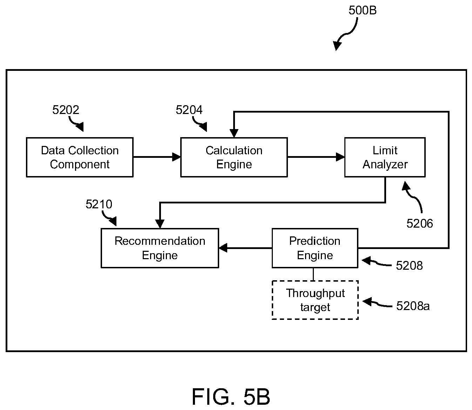

Figure 5 illustrates a schematic diagram showing an exemplary implementation of a facility management system in a facility in accordance with one or more example embodiments described herein. In accordance with one or more example embodiments, the facility management system 500 described herein controls plurality of processes and/or assets in the facility. Additionally, the facility management system 500 described herein also manages emissions associated with the plurality of processes and/or assets in the facility. In this regard, the facility management system 500 receives telemetry data from one or more sensors associated with each of the plurality of assets. Further, the facility management system 500 processes the telemetry data to determine one or more insights. For example, the facility management system 500 processes the telemetry data to determine an operating set point associated with an asset. In another example, the facility management system 500 processes the telemetry data to determine emission level associated with an asset. Further, in another example, the facility management system 500 processes the telemetry data to determine one or more corrective actions and/or recommendations. Whereas in another example, the facility management system 500 processes the telemetry data to determine one or more reasons associated with a particular trend of operations or emissions associated with the processes and/or assets. Yet in another example, the facility management system 500 processes the telemetry data to determine one or more predictions associated with a particular trend of operations or emissions associated with the processes and/or assets. Also, in some example embodiments, the facility management system 500 constructs a model related to the operations or emissions associated with the processes and/or assets based on the processed telemetry data. In addition, in some example embodiments, the facility management system 500 undertakes relevant actions based on the one or more insights. Also, in some example embodiments, the facility management system 500 creates one or more service cases based at least on the one or more insights. Accordingly, the system 500 facilitates a practical application of data analytics technology and/or digital transformation technology to efficiently control the plurality of processes and/or assets and manage emissions in the facility.

In an example embodiment, the facility management system 500 is a server system (e.g., a server device) that facilitates a data analytics platform between one or more computing devices, one or more data sources, and/or one or more assets. In one or more example embodiments, the facility management system 500 is a device with one or more processors and a memory. Also, in some example embodiments, the facility management system 500 is implementable via the cloud 106. The facility management system 500 is implementable in one or more facilities related to one or more technologies, for example, but not limited to, enterprise technologies, connected building technologies, industrial technologies, Internet of Things (IoT) technologies, data analytics technologies, digital transformation technologies, cloud computing technologies, cloud database technologies, server technologies, network technologies, private enterprise network technologies, wireless communication technologies, machine learning technologies, artificial intelligence technologies, digital processing technologies, electronic device technologies, computer technologies, supply chain analytics technologies, aircraft technologies, industrial technologies, cybersecurity technologies, navigation technologies, asset visualization technologies, oil and gas technologies, petrochemical technologies, refinery technologies, process plant technologies, procurement technologies, and/or one or more other technologies.

In some example embodiments, the facility management system 500 comprises one or more components and/or sub-systems such as process control system 5002, emission management system 5004, machine learning algorithm 5006, and/or user interface 5008. Additionally, in one or more example embodiments, the facility management system 500 comprises processor 5010 and/or memory 5012. In one or more example embodiments, one or more components and/or sub-systems of the facility management system 500 can be communicatively coupled to processor 5010 and/or memory 5012 via a bus 5014. In certain example embodiments, one or more aspects of the facility management system 500 (and/or other systems, apparatuses and/or processes disclosed herein) constitute executable instructions embodied within a computer-readable storage medium (e.g., the memory 5012). For instance, in an example embodiment, the memory 5012 stores computer executable component and/or executable instructions (e.g., program instructions). Furthermore, the processor 5010 facilitates execution of the computer executable components and/or the executable instructions (e.g., the program instructions). In an example embodiment, the processor 5010 is configured to execute instructions stored in memory 5012 or otherwise accessible to the processor 5010.

The processor 5010 is a hardware entity (e.g., physically embodied in circuitry) capable of performing operations according to one or more embodiments of the disclosure. Alternatively, in an example embodiment where the processor 5010 is embodied as an executor of software instructions, the software instructions configure the processor 5010 to perform one or more algorithms and/or operations described herein in response to the software instructions being executed. In an example embodiment, the processor 5010 is a single core processor, a multi-core processor, multiple processors internal to the facility management system 500, a remote processor (e.g., a processor implemented on a server), and/or a virtual machine. In certain example embodiments, the processor 5010 is in communication with the memory 5012, the process control system 5002, the emission management system 5004, the machine learning algorithm 5006, and/or the user interface 5008 via the bus 5014 to, for example, facilitate transmission of data between the processor 5010, the memory 5012, the process control system 5002, the emission management system 5004, the machine learning algorithm 5006, and/or the user interface 5008. In some example embodiments, the processor 5010 may be embodied in a number of different ways and, in certain example embodiments, includes one or more processing devices configured to perform independently. Additionally or alternatively, in one or more example embodiments, the processor 5010 includes one or more processors configured in tandem via bus 5014 to enable independent execution of instructions, pipelining of data, and/or multi-thread execution of instructions.

The memory 5012 is non-transitory and includes, for example, one or more volatile memories and/or one or more non-volatile memories. In other words, in one or more example embodiments, the memory 5012 is an electronic storage device (e.g., a computer-readable storage medium). The memory 5012 is configured to store information, data, content, one or more applications, one or more instructions, or the like, to enable the facility management system 500 to carry out various functions in accordance with one or more embodiments disclosed herein. In accordance with some example embodiments described herein, the memory 5012 may correspond to an internal or external memory of the facility management system 500. In some examples, the memory 5012 may correspond to a database communicatively coupled to the facility management system 500. As used herein in this disclosure, the term "component," "system," and the like, is a computer-related entity. For instance, "a component," "a system," and the like disclosed herein is either hardware, software, or a combination of hardware and software. As an example, a component is, but is not limited to, a process executed on a processor, a processor circuitry, an executable component, a thread of instructions, a program, and/or a computer entity.

In one or more example embodiments, the process control system 5002 controls one or more processes and/or assets in the facility. For example, if the facility implements a particular industrial process to manufacture a finished product then the process control system 5002 can control one or more process variables related to the process in order to manage emissions. In another example, if the facility implements a particular industrial process then the process control system 5002 can determine one or more setpoints to operate the one or more assets in the facility. In accordance with one or more example embodiments, the process control system 5002 receives the telemetry data from the one or more assets in the facility. For example, the process control system 5002 can receive the telemetry data from one or more sensors associated with the one or more assets in the facility. Further, the process control system 5002 processes the telemetry data to determine one or more parameters associated with the one or more processes and/or assets in the facility. For example, a parameter can correspond to set points at which each of the one or more assets are currently operating in the facility. In another example, a parameter can correspond to emission levels associated with each of the one or more assets operating at a particular set point in the facility. Yet in another example, a parameter can correspond to emission levels associated with workflows of a particular industrial process. In this regard, the example emission levels can be, but not limited to a carbon emission level and a greenhouse house gas emission level. In some example embodiments, the process control system 5002 transmits the telemetry data received from the one or more sensors to the emission management system 5004. Whereas in some example embodiments, the process control system 5002 additionally transmits the one or more parameters to the emission management system 5004. Additionally, the process control system 5002 pre-processes data that is, the telemetry data or one or more parameters to be in a format compatible with the emission management system 5004. In accordance with some examples, the one or more parameters can correspond to at least some of the one or more insights determined by the facility management system 500 as well. An exemplary process control system is described in more details in accordance with Figure 5A of the current disclosure.

In one or more example embodiments, the emission management system 5004 receives the data transmitted by the process control system 5002. Further, the emission management system 5004 processes the received data to determine one or more factors. Specifically, in some examples, the one or more factors can be related to emissions in the facility. For example, a factor can correspond to operating set points associated with the assets being responsible for emissions in the facility. In another example, a factor can correspond to an age of an asset being responsible for a specific intensity of emission in the facility. Further, in another example, a factor can correspond to a type or nature of material handled by an asset being responsible for a particular emission. Yet in another example, a factor can correspond to a process or workflow performed by an asset being responsible for fugitive emissions. Additionally, in another example, a factor can correspond to an expected throughput of the facility as well.

In some example embodiments, the emission management system 5004 applies one or more pre-defined functions (say, related to emissions) on the received data to determine the one or more factors. For example, a function of the one or more pre-defined functions can corelate the telemetry data or parameters associated with the one or more processes and/or assets. In this regard, the function can corelate the emission level associated with each of the one or more assets operating in the facility. In another example, a function of the one or more pre-defined functions can determine overall emissions in the facility. Further, in another example, a function of the one or more pre-defined functions can determine emissions associated with one or more workflows of a particular industrial process. Yet in another example, a function of the one or more pre-defined functions can determine specific emission levels associated with the one or more processes and/or assets. In accordance with some example embodiments, the one or more pre-defined functions can be based at least in part on historic data associated with the facility. Also, in some example embodiments, the emission management system 5004 generates one or more functions in near-real time based at least on the telemetry data or parameters. In this regard, the emission management system 5004 applies the one or more functions on the received data to determine the one or more factors. For example, the emission management system 5004 can determine a function with one or more emission equations based at least on the telemetry data or parameters. Then, the emission management system 5004 can apply the one or more emission equations on the received data. Accordingly, based at least on the one or more emission equations, the emission management system 5004 can output one or more emission calculations for each of the one or more assets. Further, the emission management system 5004 can identify the one or more factors based at least on the one or more emission calculations. Also, at least one of the one or more emission calculations corresponds to correlated emission level based on correlation of emission level associated with each of the one or more assets in the facility. In addition, the emission management system 5004 can translate the emission calculations to understandable insights around the emission levels.

Upon application of a function, the emission management system 5004 can perform further analysis on results obtained upon application of the function. In this regard, the emission management system 5004 can perform comparison between results obtained upon application of the function and one or more thresholds. For example, upon correlation of the emission level associated with each of the one or more assets, the emission management system 5004 can compare the correlated emission level with a predefined threshold. Per this aspect, the emission management system 5004 can determine if the facility is in compliance standards prescribed by regulatory based on the correlated emission level. For instance, if the comparison of the correlated emission level exceeds the predefined threshold, then the emission management system 5004 identifies one or more corrective actions. Whereas in another instance, if the comparison of the correlated emission level exceeds the predefined threshold, then the emission management system 5004 determines non-compliance with the standards.

Further, in some example embodiments, the emission management system 5004 determines the one or more root causes, corrective actions, opportunities, recommendations, predictions, and/or the like as the one or more factors. In this regard, the one or more root causes can be, but not limited to leakage, open flange, loose connections, asset aging, requirement of service for an asset, set point at which an asset is operating, a type of material handled by an asset, current throughput of the facility, a process handled by an asset, impact of emission on other assets, and/or the like. Further, the one or more corrective actions can be, but not limited to changing a set point of at least one asset in the facility, modifying an overall throughput of the facility, replacing at least one asset in the facility, servicing at least one asset in the facility, and/or the like. Furthermore, the one or more opportunities can be, but not limited to identification of set points of specific assets that can be adjusted to reduce emission levels, quantification of emission levels to identify excess or inefficient energy usage, cost savings associated with modification of set points of specific assets, suitable throughput value for the facility to meet emission standards, determination of emission levels that can be reduced, efficient consumption of energy, identification of workflows/processes that can be eliminated to reduce emissions, suggestion of alternate material for a manufacturing process, and/or the like. Also, the one or more recommendations can be, but not limited to alternate set point values for specific assets to reduce emission levels, suitable operation windows for operating the assets and/or processes, and/or the like. Yet the one or more predictions can be, but not limited to a particular trend of operations of assets for a specific time window, a particular trend of emissions for a specific time window, emissions that are likely to be emitted for a particular workflow of a process, emissions that are likely to be emitted for a particular throughput value of the facility, and/or the like. In accordance with some examples, the one or more factors can correspond to at least some of the one or more insights determined by the facility management system 500. Also, in some example embodiments, the emission management system 5004 determines an impact on overall emissions of the facility based on the one or more factors. An exemplary emission management system is also described in more details in accordance with Figure 5B of the current disclosure. Also, in accordance with some example embodiments, the emission management system 5004 transmits the one or more factors to the process control system 5002. Based at least on the one or more factors, the process control system 5002 can undertake one or more actions to control one or more processes and/or assets in the facility. Additionally, in some example embodiments, the emission management system 5004 transmits the one or more factors to the user interface 5008.

Further, in some example embodiments, the facility management system 500 utilizes the machine learning algorithm 5006 to provide the one or more insights. Said alternatively, the machine learning algorithm 5006 comprises one or more models (based on the knowledge graphs 334) that can be used by the facility management system 500 to provide the one or more insights. Also, in some example embodiments, the machine learning algorithm 5006 can be trained with one or more datasets to facilitate provision of the one or more insights. In this regard, the one or more datasets can be related to operations and emissions associated with the assets and/or processes in the facility. For example, the one or more datasets can be, but not limited to historical throughput values of the facility, emission profile associated with the facility, emission profiles for particular assets and/or processes in the facility, emission intensities of particular gases in the facility, regulatory standards, historical financial impacts, historical operational variables of assets and/or processes in the facility, historical process variables of assets and/or processes in the facility, near-real time operational variables of assets and/or processes in the facility, near-real time process variables of assets and/or processes in the facility, historical root causes, historical corrective actions, historical opportunities, historical recommendations, historical predictions, and/or the like. Further, in some example embodiments, the machine learning algorithm 5006 defines the one or more thresholds. Specifically, in some example embodiments, the one or more thresholds can be associated with emissions. In this regard, the machine learning algorithm 5006 can define the one or more thresholds based on rules or safe emission levels prescribed by regulatory, emission profiles associated with assets and/or processes in the facility, etc.,. Also, in some example embodiments, the process control system 5002 and/or the emission management system 5004 utilize the machine learning algorithm 5006 to determine the one or more parameters and/or the one or more factors. Additionally, in some example embodiments, the one or more insights can be provided as a feedback to the machine learning algorithm 5006. Whereas in some example embodiments, personnel in the facility can also provide a feedback on the insights or input actions undertaken by them. In this regard, the machine learning algorithm 5006 learns over time to provide improved and accurate insights. For example, the facility management system 500 via the machine learning algorithm 5006 can flag one or more actions taken by personnel in the facility if they are determined to have caused a spike in emissions in the facility. In another example, the facility management system 500 via the machine learning algorithm 5006 can generate new insights based on one or more actions taken by personnel in the facility. Also, in some example embodiments, the machine learning algorithm 5006 can be trained with one or more new datasets on a regular basis or for a pre-defined time interval to improve relevancy of insights.

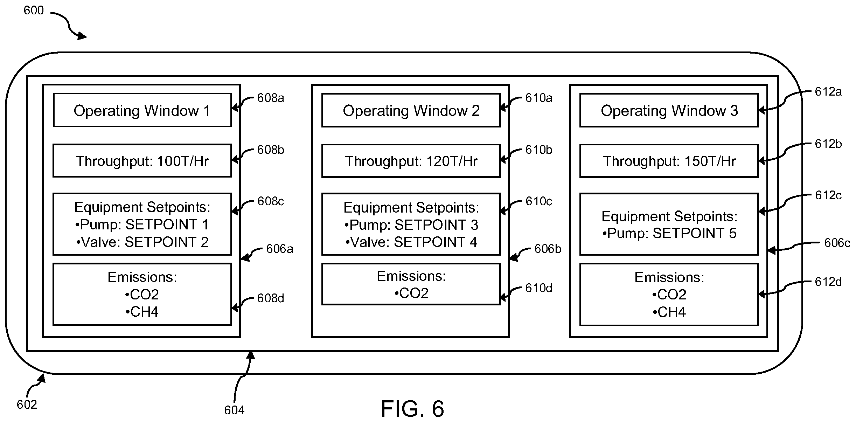

Further, in some example embodiments, the one or more insights can be transmitted to the user interface 5008. Per this aspect, the one or more insights can be rendered on the user interface 5008. For example, one or more corrective actions can be rendered on the user interface 5008. In another example, one or more recommendations can be rendered on the user interface 5008. Yet in another example, the one or more root causes can be rendered on the user interface 5008. The user interface 5008 can correspond to an interface of a device associated with personnel in the facility. In one example, the user interface 5008 can correspond to an interface of a device associated with an operator in the facility. In another example, the user interface 5008 can correspond to an interface of a device associated with a supervisor of the operator in the facility. In some example embodiments, one or more alert signals can be generated based on the one or more insights provided by the machine learning algorithm 5006. In some example embodiments, the one or more alert signals can be transmitted to the user interface 5008. In this regard, in some example embodiments, one or more notifications can be generated on the user interface 5008 based on the one or more alert signals. Accordingly, in some examples, the one or more notifications can be visual notifications. Whereas, in some examples, the one or more notifications can be audio notifications. Also, in some example embodiments, the user interface 5008 allows the personnel to provide input and/or feedback regarding the one or more insights. For example, an input can correspond an operator selecting a corrective action. In another example, a feedback can correspond to an operator providing a correct operating set point for an asset over a set point provided by the facility management system 500. An exemplary user interface is also described in more details in accordance with Figure 6 of the current disclosure.

In some example embodiments, the one or more components, one or more sub-systems, processor 5010 and/or memory 5012 of the facility management system 500 can be communicatively coupled to cloud 5016 over a network. In this regard, the one or more components, processor 5010 and/or memory 5012 along with the cloud 5016 control the plurality of processes and/or assets and manage emissions in the facility. In some example embodiments, the network may be for example, a Wi-Fi network, a Near Field Communications (NFC) network, a Worldwide Interoperability for Microwave Access (WiMAX) network, a personal area network (PAN), a short-range wireless network (e.g., a Bluetooth^{®} network), an infrared wireless (e.g., IrDA) network, an ultra-wideband (UWB) network, an induction wireless transmission network, a BACnet network, a NIAGARA network, a NIAGARA CLOUD network, and/or another type of network. In some example embodiments, the telemetry data received from the one or more assets can be transmitted to the cloud 5016. Also, in some example embodiments, the cloud 5016 can be configured to perform analysis on the telemetry data to determine the one configured to transmit the one or more insights to the user interface 5008. In some example embodiments, the cloud 5016 can be configured to perform one or more operations/functionalities of the one or more components, one or more sub-systems, processor 5010 and/or memory 5012 of the facility management system 500.

Figure 5A illustrates a schematic diagram showing an exemplary process control system in accordance with one or more example embodiments described herein. In some example embodiments, exemplary process control system 500A described herein corresponds to process control system 5002 described in Figure 5 of the current disclosure. The process control system 500A described in Figure 5A comprises various components that facilitate production or processing of at least one product or other material. For instance, the system 500A can be used to facilitate control over one or more assets in a facility such as one or more industrial plants. Each plant can represent one or more processing facilities (or one or more portions thereof), such as one or more manufacturing facilities for producing at least one product or other material. In general, each plant can implement one or more industrial processes and can individually or collectively be referred to as a process system. A process system generally represents any system or portion thereof configured to process one or more products or other materials in some manner.

The process control system 500A comprises one or more sensors 5102a and one or more actuators 5102b. The sensors 5102a and actuators 5102b represent components in a process system that can perform any of a wide variety of functions. Also, the sensors 5102a can be associated with the one or more assets in the facility. For example, the sensors 5102a measures a wide variety of characteristics associated with the one or more assets, such as flow, pressure, temperature, emissions, etc.,. In this regard, the measurement related to wide variety of characteristics can correspond to telemetry data. Also, the actuators 5102b alters a wide variety of characteristics for the assets in the process system, such as process variables, operating set points, valve openings, and/or the like based at least on one or more insights derived by facility management system 500. Each of the sensors 5102a includes any suitable structure for measuring one or more characteristics in a process system. Each of the actuators 5102b includes any suitable structure for operating on or affecting one or more characteristics in a process system.

At least one network 5104 is coupled to the sensors 5102a and actuators 5102b. The network 5104 facilitates interaction with the sensors 5102a and actuators 5102b. For example, the network 5104 can transport measurement data from the sensors 5102a and provide control signals to the actuators 5102b. The network 5104 can represent any suitable network or combination of networks. As particular examples, the network 5104 can represent Ethernet network (such as one supporting a FOUNDATION FIELDBUS protocol), electrical signal network (such as a HART network), pneumatic control signal network, or any other or additional type(s) of network(s).

The system 500A also includes various controllers 5106. The controllers 5106 can be used in the system 500A to perform various functions in order to control the one or more assets and/or industrial processes. For example, a first set of controllers 5106 can use measurements from the one or more sensors 5102a to control the operation of the one or more actuators 5102b and thereby associated assets. A second set of controllers 5106 can be used to optimize the control logic or other operations performed by the first set of controllers for example, operating at least one asset at a set point different from a currently operating set point. A third set of controllers 5106 can be used to control industrial processes. The controllers 5106 can therefore support a combination of approaches, such as regulatory control, advanced regulatory control, supervisory control, and advanced process control to manage emissions in the facility. Each controller 5106 includes any suitable structure for controlling one or more aspects of an industrial process based on the one or more insights derived by the facility management system 500. At least some of the controllers 5106 can, for example, represent proportional-integral-derivative (PID) controllers or multivariable controllers, such as controllers implementing model predictive control (MPC) or other advanced process control (APC). As a particular example, each controller 5106 can represent a computing device running a real-time operating system, a WINDOWS operating system, or other operating system. Further, at least one of the controllers 5106 can represent a model-based controller that operates using one or more process models. In accordance with some example embodiments, the one or more process models can be based on the knowledge graphs 334. For example, each of these controllers 5106 operate using the one or more process models to determine, based on measurements from the one or more sensors 5102a, how to adjust the one or more actuators 5102b. In another example, each of these controllers 5106 operate using the one or more process models to modify a set point of an asset in order to reduce emissions. Also, in some example embodiments, at least one of the controllers 5106 operates based at least on one or more factors determined by emission management system 5004. In some example embodiments, each model associates one or more manipulated or disturbance variables (often referred to as independent variables) with one or more controlled variables (often referred to as dependent variables). Each of these controllers 5106 can use an objective function to identify how to adjust its manipulated variables in order to push its controlled variables to the most attractive set of constraints with minimal emissions.

In some example embodiments, at least one network 5108 couples the controllers 5106 and other devices in the system 500A. The network 5108 facilitates the transport of information between components. The network 5108 represents any suitable network or combination of networks. As particular examples, the network 5108 can represent at least one Ethernet network. In accordance with some example embodiments, operator access to and interaction with the controllers 5106 and other components of the system 500A can occur via various operator consoles 5110. In some example embodiments, the operator consoles 5110 can be same as that of user interface 5008. Each operator console 5110 can provide the one or more insights related to one or more root causes, corrective actions, opportunities, recommendations, predictions, and/or the like to personnel in the facility. For example, the operator console 5110 can render a list of prioritized corrective actions that is to be taken. In another example, the operator console 5110 can render one or more emission intensities for a particular throughput of the facility. Also, each operator console 5110 can receive input and/or feedback from personnel in the facility. For example, the operator console 5110 can receive a selection of a particular corrective action from an operator in the facility. In another example, the operator console 5110 can receive a feedback from an operator indicating an action that was undertaken by the operator over a suggested action rendered on the operator console 5110. In some example embodiments, each operator console 5110 can also provide information associated with a current state of an industrial process to personnel, such as values of various process variables, operating variables, emission levels, warnings, alarms, or other states associated with the industrial process and/or the assets. In this regard, each operator console 5110 can also render information affecting how the industrial process and/or an asset is controlled, such as by receiving setpoints or control modes for process variables controlled by the controllers 5106, an action taken by an operator in the facility, or emission information that alters or affects how the controllers 5106 control the industrial process. In some example embodiments, each operator console 5110 includes any suitable structure for displaying information to and interacting with an operator. Each operator console 5110 can represent a computing device running a WINDOWS operating system or other operating system. Multiple operator consoles 5110 can be grouped together and used in one or more control rooms 5112 or field operators. Each control room 5112 can include any number of operator consoles 5110 in any suitable arrangement.

The system 500A here can additionally include at least one historian 5116 and/or one or more servers 5114. The historian 5116 represents a component that stores various information about the system 500A. In some example embodiments, the historian 5116 can, for instance, store information that is generated by the various controllers 5106 during the control of one or more industrial processes and/or assets. Also, in some example embodiments, the historian 5116 can store historic emission levels and profiles associated with one or more industrial processes and/or assets. In addition, in some example embodiments, the historian 5116 can store the telemetry data. In this regard, the historian 5116 includes any suitable structure for storing and facilitating retrieval of information. Although shown as a single component here, the historian 5116 can be located elsewhere in the system 500A, or multiple historians can be distributed in different locations in the system 500A. In this regard, the data in the historian 5116 can be used to train machine learning algorithm 5006. Further, in some example embodiments, each server 5114 denotes a computing device that executes applications for users of the operator consoles 5110 or other applications. The applications can be used to support various functions for the operator consoles 5110, the controllers 5106, or other components of the system 500A. Each server 5114 can represent a computing device running a WINDOWS operating system or other operating system. Also, in accordance with some example embodiments, functionality of the server 5114 is also implementable via a remote server communicatively coupled to the process control system 500A via a gateway 5118.

In one or more example embodiments, at least one component of the system 500A supports a mechanism for identifying impacts and causes of variability, specifically due to emissions on model-based controller performance. For example, this can correspond to identification of overall impact of emissions on operations of model-based controller. In another example, this can correspond to identification of current throughput or operating set point as a cause for variability. Also, in some example embodiments, this mechanism can be used to evaluate process variability at specific time intervals in order to provide an early detection of loss of performance in at least some model-based controllers 5106 due to specific emissions. In some example embodiments, this functionality is implementable via operator console 5110, server 5114, remote server, at least some controllers 5106, and/or the like. Additionally, in some example embodiments, this mechanism involves certain calculations for determining process variability. For example, the mechanism can undertake certain specific emission calculations to determine process variability. Also, in some example embodiments, the mechanism can translate the emission calculations or its results into understandable insights. In this regard, the insights can be rendered as visualizations, such as on displays of the operator consoles 5110, to help personnel such as field operators to identify potential causes or impacts of the process variability and thereby undertake appropriate actions.

Figure 5B illustrates a schematic diagram showing an exemplary emission management system in accordance with one or more example embodiments described herein. In some example embodiments, exemplary emission management system 500B described herein corresponds to emission management system 5004 described in Figure 5 of the current disclosure. According to various example embodiments described herein, the emission management system 500B comprises one or more components such as a data collection component 5202, a calculation engine 5204, a limit analyzer 5206, a prediction engine 5208, a throughput target component 5208a, and/or a recommendation engine 5210. In accordance with one or more example embodiments, the aforementioned one or more components facilitate the emission management system 500B to provide one or more factors such as root causes, corrective actions, opportunities, recommendations, predictions, and/or the like as described in Figure 5 of the current disclosure. In some example embodiments, the data collection component 5202 is configured to receive data, such as telemetry data and/or one or more parameters from process control system 5002 say, via bus 5014. Also, in some example embodiments, the data collection component 5202 is configured to directly receive the telemetry data from the one or more assets in a facility as well. In this regard, the data collection component 5202 can operate as an intermediary node to transact the data between the assets, the process control system 5002, and/or the emission management system 500B. Also, in some example embodiments, the data collection component 5202 can pre-process the received data in a format that is compatible with other components of the emission management system 500B. Further, the data collection component 5202 transmits the data to the calculation engine 5204.

In one or more example embodiments, the calculation engine 5204 comprises one or more functions that can be applied on the data transmitted by the data collection component 5202. In this regard, the one or more functions can be related to overall emissions of the facility, specific type of emissions, emission level associated with the one or more assets, correlation of emission level, emission level associated with one or more processes, throughput of the facility, set points of assets, and/or the like. In some examples, at least some of the functions can be predefined based on historic data associated with the facility. Whereas in some examples, at least some of the functions can be defined based on near-real time data that is received at the calculation engine 5204. In some example embodiments, at least some of the one or more functions can correspond to one or more emission equations. Based at least on the one or more functions, the calculation engine 5204 can output one or more emission calculations done using the data received at the calculation engine 5204. For example, the calculation engine 5204 can output correlated emission level for the assets in the facility. In another example, the calculation engine 5204 can output set points for different assets based on emission levels associated with the assets. Yet in another example, the calculation engine 5204 can output added or reduced emissions for a particular throughput of the facility. Also, in another example, the calculation engine 5204 can output alterations that is to be made to operating boundaries of process or operation variables to mitigate emissions. Further, in another example, the calculation engine 5204 can output current and/or future emissions trends. Also, the calculation engine 5204 transmits the one or more emission calculations to the limit analyzer 5206.

In one or more example embodiments, the limit analyzer 5206 comprises one or more limits associated with operations and/or emissions of the assets in the facility. In this regard, the one or more limits can represent values for operations and/or emissions in the facility. The limit analyzer 5206 can include data related to such as, but not limited to operational boundaries for operational variables, operational boundaries for process variables, safety limits for operational variables, safety limits for process variables, permissible emissions associated with the assets, safe emission levels, standard emission levels set by regulatory, one or more thresholds, and/or the like. Based on the aforementioned data, the limit analyzer 5206 can derive the one or more limits. Also, based on correlation of aforementioned data, the limit analyzer 5206 can define the one or more limits. In some example embodiments, the limit analyzer 5206 can compare the emission calculations. The limit analyzer 5206 compares the emission calculations to determine if the operations and/or emissions in the facility are compliant with the one or more limits. For example, the correlated emission level outputted by the calculation engine 5204 can be compared with a specific limit. In this regard, the limit analyzer 5206 can determine that at least one operation and/or emission is non-compliant if the correlated emission level exceeds the specific limit. In another example, the set points outputted by the calculation engine 5204 can be compared with another specific limit to determine if corresponding emissions comply with standards. Further, the limit analyzer 5206 can transmit the comparison of the emission calculations to the recommendation engine 5210.

In some example embodiments, the prediction engine 5208 is configured to provide one or more predictions related to the operations and/or emissions in the facility. For example, the prediction engine 5208 along with machine learning algorithm 5006 can provide the one or more predictions. In another example, the prediction engine 5208 along with the calculation engine 5204 and the limit analyzer 5206 can provide the one or more predictions. Also, in some example embodiments, the prediction engine 5208 is communicatively coupled to the throughput target component 5208a. Additionally, in some example embodiments, the throughput target component 5208a can be a part of the prediction engine 5208. In this regard, the throughput target component 5208a comprises information such as a target throughput value for the facility, a current throughput value that is set for the facility, a future or planned target throughput value for the facility, and/or the like. Per this aspect, the prediction engine 5208 can additionally consider the information from the throughput target component 5208a to provide the one or more predictions. The one or more predictions can be, but not limited to emission levels of the assets and/or overall facility, trends of emissions, emission trend of a particular gas in the facility, operations of the assets and/or processes, a potential consequence based on fugitive emissions, a particular trend of operations or emissions associated with the processes and/or assets, a particular trend of operations of assets for a specific time window, a particular trend of emissions for a specific time window, emissions that are likely to be emitted for a particular workflow of a process, emissions that are likely to be emitted for a particular throughput value of the facility, and/or the like. The prediction engine 5208 can transmit the one or more predictions to the recommendation engine 5210.

In one or more example embodiments, the recommendation engine 5210 determines one or more insights based at least on the emission calculations and the one or more predictions. In this regard, the one or more insights can be same as that of root causes, corrective actions, opportunities, recommendations, predictions, and/or the like as described in Figure 5 of the current disclosure. For example, if the limit analyzer 5206 determines that at least one operation and/or emission is non-compliant provided that the correlated emission level exceeds the specific limit, then the recommendation engine 5210 provides a corrective action to modify a throughput of the facility. In another example, if the limit analyzer 5206 determines that at least one operation and/or emission is compliant, then the recommendation engine 5210 provides an opportunity to modify a set point of an asset to achieve significant savings in costs. Further, in another example, based at least on comparison of the emission calculations, the recommendation engine 5210 provides operating windows as a recommendation that comprises one or more throughput values along with associated emission levels and set points. Also, in some example embodiments, the recommendation engine 5210 based at least on the comparison of the emission calculations translates the emission calculations to understandable insights such as root causes, corrective actions, opportunities, recommendations, predictions, and/or the like around the emission level. Further, the insights can be transmitted to the process control system 5002 so that the process control system 5002 can undertake one or more actions based on the insights. In this regard, the insights can be rendered on operator console 5110 (alternatively, user interface 5008 as well) so that a field operator can review the insights and provide inputs accordingly. Also, the field operator can undertake one or more actions based on the insights. Based at least on the one or more actions, the process control system 5002 can, for example, operate at least one asset in the facility a set point different from a currently operating set point.

In accordance with some example embodiments, the emission management system 500B acts a tool that is configured to receive specific inputs related to the facility and provide corresponding outputs. The inputs related to the facility can be provided by an operator via the operator console 5110 (alternatively, the user interface 5008 as well). Further, the received inputs can be transmitted to the emission management system 500B for instance, via the bus 5014. Per this aspect, the inputs can be, but not limited to a throughput value of the facility for which the operator wants to know associated operating points and emission levels, an ask for current or predicted emission levels, an ask for optimal operating set points at which the assets can be operated with minimal emissions, and/or the like. Said alternatively, the operator can provide such inputs associated with operations and/or emissions in the facility on which the operator wants to know more. The emission management system 500B processes the inputs to determine corresponding outputs. In this regard, the emission management system 500B can identify context associated with the inputs. Further, the emission management system 500B identifies data (for instance, from historian 5116 or memory 5012) and at least some functions of the one or more functions (for instance, from the calculation engine 5204) based on the context. Upon identification of data, the emission management system 500B say, via the calculation engine 5204 applies the at least some functions on the identified data. Based on the application of the at least some functions, the emission management system 500B determines corresponding outputs for the inputs. For example, if an input correspond to an ask for emission levels for past 2 hours of a pump, then the emission management system 500B can identify data associated with the pump for past 2 hours, apply a specific function, and output the corresponding emission level of the pump for past 2 hours. The emission management system 500B then transmits the outputs for the corresponding inputs to the operator console 5110 (alternatively, the user interface 5008 as well) for instance, via the bus 5014. The operator console 5110 (alternatively, the user interface 5008 as well) can render the outputs in formats such as graphs, dashboards, descriptions, and/or the like. Accordingly, in some example embodiments, operators in the facility can use the emission management system 500B as a tool for "what-if" analysis to understand various situations and undertake appropriate actions. With this, the operations and/or emissions in the facility come under operator's purview so that the operator can choose the best set points to operate assets with minimal emissions.

Figure 6 illustrates a schematic diagram showing an exemplary user interface in accordance with one or more example embodiments described herein. An exemplary user interface 604 described herein is a part of computing environment 600. In some example embodiments, the exemplary user interface 604 described herein corresponds to user interface 5008 described in Figure 5 of the current disclosure and/or operator console 5110 described in Figure 5A of the current disclosure. The exemplary user interface 604 described herein is a part of computing device 602. The computing device 602 for instance, can be, but not limited to a mobile device, a wearable device, a smart glass with augmented reality functions, a tablet computer, a laptop, a desktop computer and/or the like. The user interface 604 described herein is an intuitive interface that receives inputs from personnel such as field operators in a facility and provides corresponding outputs for display. The operators in the facility can provide the inputs to perform "what-if' analysis so as to understand various situations and undertake appropriate actions. With this, the operations and/or emissions in the facility come under operator's purview so that the operator can choose the best set points to operate assets with minimal emissions.

The user interface 604 described herein allows an operator to enter inputs such as a throughput value of the facility for which the operator wants to know associated operating points and emission levels, an ask for current or predicted emission levels, an ask for optimal operating set points at which assets can be operated with minimal emissions, an ask for optimal operating windows, and/or the like. In some example embodiments, the operator can provide the inputs to the user interface 604 as a textual string and/or the like. For example, if the facility corresponds to a natural gas manufacturing plant and the operator wants to know operating points and emission levels for different production targets or throughputs (say, in T/Hr said as tons per hour), then the operator can provide the same as an input. For instance, the operator can enter a textual string as "What are the operating points and emission levels if the throughput of the facility corresponds to 100T/Hr, 120T/Hr, and 150T/Hr". The received input can be transmitted to emission management system 500B for instance, via bus 5014. The emission management system 500B processes the input to determine one or more corresponding outputs. In this regard, the emission management system 500B can identify a context as determination of operating points and emission levels for three different throughputs 100T/Hr, 120T/Hr, and 150T/Hr. Further, the emission management system 500B identifies data (for instance, from historian 5116 or memory 5012) and at least some functions of one or more functions (for instance, from calculation engine 5204) based on the context. Upon identification of data, the emission management system 500B say, via the calculation engine 5204 applies the at least some functions on the identified data. Based on the application of the at least some functions, the emission management system 500B determines three outputs (606a, 606b, and 606c) corresponding to three throughputs that is, 100T/Hr, 120T/Hr, and 150T/Hr. Each of the three outputs (606a, 606b, and 606c) comprises operating window, operating set points, and/or emission levels along with a throughput value. For example, first output 606a comprises an operating window 608a along with operating set points 608c and emission level 608d for throughput value 608b that is, 100T/Hr. In this regard, the first output 606a for instance, can mean that if the facility is operated at the throughput value 608b, then assets such pump and valve needs to be operated at set points 1 and 2 (608c), respectively. This would involve emissions 608d such as CO2 (carbon dioxide) and CH4 (methane). Additionally, the emissions 608d can represent intensity of corresponding emissions as well. Similarly, the second output 606b can comprise an operating window 610a along with operating set points 610c and emission level 610d for throughput value 610b that is, 120T/Hr, and the third output 606c can comprise an operating window 612a along with operating set points 612c and emission level 612d for throughput value 612b that is, 150T/Hr. The operator can view all of the three outputs (606a, 606b, and 606c) and make a decision accordingly. In this regard, the operator can provide another input that corresponds to a selection of one of three operating windows (608a, 610a, or 612a) via the user interface 604. Based at least on this input, process control system 5002 can make changes to set points as in the selected operating window. Additionally, the user interface 604 can also render one or more insights provided by the emission management system 500B (specifically, by recommendation engine 5210) In some example embodiments, the one or more insights and the outputs (606a, 606b, and 606c) can be rendered in formats such as graphs, dashboards, descriptions, and/or the like.

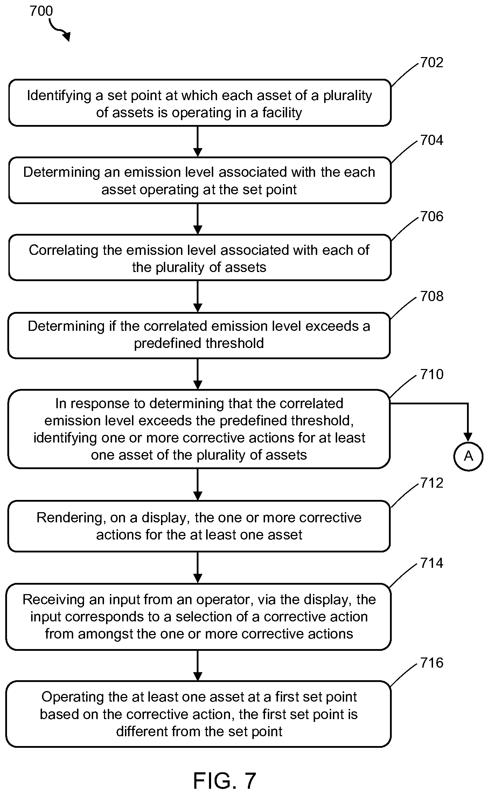

Figure 7 illustrates a flowchart showing a method described in accordance with some example embodiments described herein. An exemplary flowchart 700 describes an exemplary method for managing emissions in a facility via facility management system 500. At step 702, the facility management system 500 includes means, such as process control system 5002 and/or emission management system 5004 to identify a set point at which each asset of a plurality of assets is operating in the facility. At step 704, the facility management system 500 includes means, such as the process control system 5002 and/or emission management system 5004 to determine an emission level associated with the each asset operating at the set point. Further, at step 706, the facility management system 500 includes means, such as the emission management system 5004 to correlate the emission level associated with each of the plurality of assets. At step 708, the facility management system 500 includes means, such as the emission management system 5004 to determine if the correlated emission level exceeds a predefined threshold. In response to determining that the correlated emission level exceeds the predefined threshold, at step 710, the facility management system 500 includes means, such as the emission management system 5004 to identify one or more corrective actions for at least one asset of the plurality of assets. Additionally, at step 712, the facility management system 500 includes means, such as user interface 5008 to render the one or more corrective actions for the at least one asset. Upon rendering the one or more corrective actions, at step 714, the facility management system 500 includes means, such as the user interface 5008 via which an input from an operator is received. The input, in this regard, corresponds to a selection of a corrective action from amongst the one or more corrective actions. Upon receiving the selection, at step 716, the facility management system 500 includes means, such as the process control system 5002 to operate the at least one asset at a first set point based on the corrective action. Per this aspect, the first set point is different from the set point.

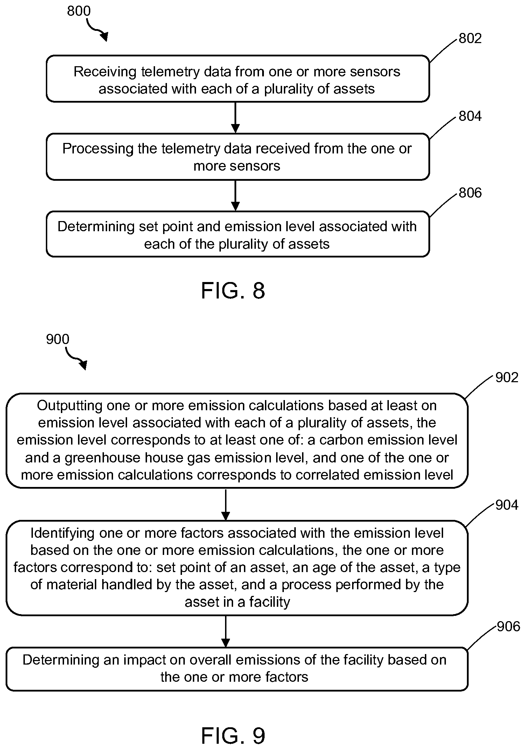

Figure 8 illustrates a flowchart showing a method described in accordance with some example embodiments described herein. An exemplary flowchart 800 described herein is implementable via facility management system 500. At step 802, the facility management system 500 includes means, such as process control system 5002 and/or emission management system 5004 to receive telemetry data from one or more sensors associated with each of a plurality of assets. At step 804, the facility management system 500 includes means, such as the process control system 5002 and/or emission management system 5004 to process the telemetry data received from the one or more sensors. Further, at step 806, the facility management system 500 includes means, such as the process control system 5002 and/or emission management system 5004 to determine set point and emission level associated with each of the plurality of assets.

Figure 9 illustrates a flowchart showing a method described in accordance with some example embodiments described herein. An exemplary flowchart 900 described herein is implementable via facility management system 500. At step 902, the facility management system 500 includes means, such as emission management system 5004 to output one or more emission calculations based at least on emission level associated with each of a plurality of assets. In this regard, the emission level corresponds to at least one of: a carbon emission level and a greenhouse house gas emission level. Additionally, one of the one or more emission calculations corresponds to correlated emission level. At step 904, the facility management system 500 includes means, such as the emission management system 5004 to identify one or more factors associated with the emission level based on the one or more emission calculations. Per this aspect, the one or more factors correspond to: set point of an asset, an age of the asset, a type of material handled by the asset, and a process performed by the asset in a facility. At step 906, the facility management system 500 includes means, such as the emission management system 5004 to determine an impact on overall emissions of the facility based on the one or more factors.

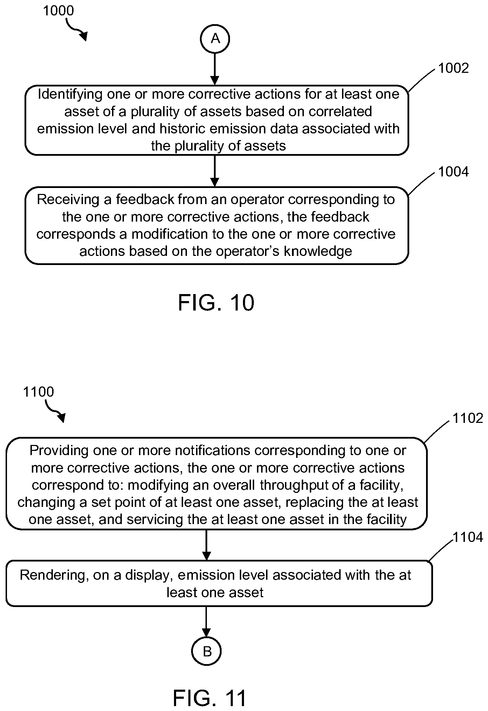

Figure 10 illustrates a flowchart showing a method described in accordance with some example embodiments described herein. An exemplary flowchart 1000 described herein is implementable via facility management system 500. At step 1002, the facility management system 500 includes means, such as emission management system 5004 to identify one or more corrective actions for at least one asset of a plurality of assets based on correlated emission level and historic emission data associated with the plurality of assets. Further, at step 1004, the facility management system 500 includes means, such as user interface 5008 via which a feedback from an operator corresponding to the one or more corrective actions is received. In this regard, the feedback corresponds to a modification to the one or more corrective actions based on the operator's knowledge.

Figure 11 illustrates a flowchart showing a method described in accordance with some example embodiments described herein. An exemplary flowchart 1100 described herein is implementable via facility management system 500. At step 1102, the facility management system 500 includes means, such as user interface 5008 via which one or more notifications corresponding to one or more corrective actions are provided. In this regard, the one or more corrective actions correspond to: modifying an overall throughput of a facility, changing a set point of at least one asset, replacing the at least one asset, and servicing the at least one asset in the facility. Further, at step 1104, the facility management system 500 also renders emission level associated with the at least one asset via the user interface 5008.

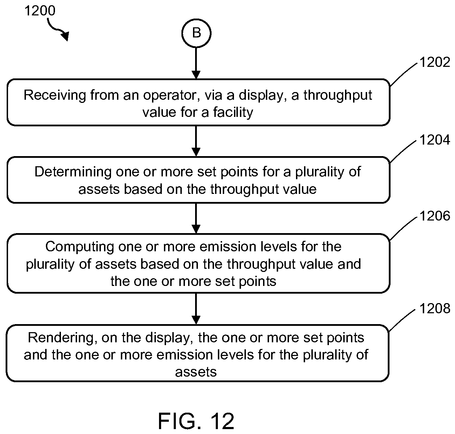

Figure 12 illustrates a flowchart showing a method described in accordance with some example embodiments described herein. An exemplary flowchart 1200 described herein is implementable via facility management system 500. At step 1202, an operator inputs a throughput value for a facility via user interface 5008 of the facility management system 500. At step 1204, the facility management system 500 includes means, such as emission management system 5004 to determine one or more set points for a plurality of assets based on the throughput value. Further, at step 1206, the facility management system 500 includes means, such as the emission management system 5004 to compute one or more emission levels for the plurality of assets based on the throughput value and the one or more set points. Additionally, at step 1208, the facility management system 500 includes means, such as the user interface 5008 via which the one or more set points and the one or more emission levels for the plurality of assets are rendered.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components may be used in conjunction with the supply management system. Therefore, it is to be understood that the inventions are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

## Claims

1. A method for managing emissions in a facility, the method comprising:
identifying a set point at which each asset of a plurality of assets is operating in the facility;
determining an emission level associated with the each asset operating at the set point;
correlating the emission level associated with each of the plurality of assets;
determining if the correlated emission level exceeds a predefined threshold;
in response to determining that the correlated emission level exceeds the predefined threshold, identifying one or more corrective actions for at least one asset of the plurality of assets;
rendering, on a display, the one or more corrective actions for the at least one asset;
receiving an input from an operator, via the display, wherein the input corresponds to a selection of a corrective action from amongst the one or more corrective actions; and
operating the at least one asset at a first set point based on the corrective action, wherein the first set point is different from the set point.

2. The method of claim 1, further comprising:
receiving telemetry data from one or more sensors associated with each of the plurality of assets;
processing the telemetry data received from the one or more sensors; and
determining the set point and the emission level associated with each of the plurality of assets.

3. The method of claim 1, further comprising:
outputting one or more emission calculations based at least on the emission level associated with each of the plurality of assets, wherein the emission level corresponds to at least one of: a carbon emission level and a greenhouse house gas emission level, and wherein one of the one or more emission calculations corresponds to the correlated emission level;
identifying one or more factors associated with the emission level based on the one or more emission calculations, wherein the one or more factors correspond to: the set point of an asset, an age of the asset, a type of material handled by the asset, and a process performed by the asset in the facility; and
determining an impact on overall emissions of the facility based on the one or more factors.

4. The method of claim 1, wherein identifying the one or more corrective actions for the at least one asset of the plurality of assets is based on the correlated emission level and historic emission data associated with the plurality of assets.

5. The method of claim 1, further comprising:
providing one or more notifications corresponding to the one or more corrective actions, wherein the one or more corrective actions correspond to: modifying an overall throughput of the facility, changing the set point of the at least one asset, replacing the at least one asset, and servicing the at least one asset in the facility; and
rendering, on the display, the emission level associated with the at least one asset.

6. The method of claim 5, further comprising:
receiving from the operator, via the display, a throughput value for the facility;
determining one or more set points for the plurality of assets based on the throughput value;
computing one or more emission levels for the plurality of assets based on the throughput value and the one or more set points; and
rendering, on the display, the one or more set points and the one or more emission levels for the plurality of assets.

7. The method of claim 4, further comprising:
receiving a feedback from the operator corresponding to the one or more corrective actions, wherein the feedback corresponds a modification to the one or more corrective actions based on the operator's knowledge.

8. A system for managing emissions in a facility, the system comprising:
a processor;
a memory communicatively coupled to the processor, wherein the memory comprises one or more instructions which when executed by the processor, cause the processor to:
identify a set point at which each asset of a plurality of assets is operating in the facility;
determine an emission level associated with the each asset operating at the set point;
correlate the emission level associated with each of the plurality of assets;
determine if the correlated emission level exceeds a predefined threshold;
in response to determining that the correlated emission level exceeds the predefined threshold, identify one or more corrective actions for at least one asset of the plurality of assets;
render, on a display, the one or more corrective actions for the at least one asset;
receive an input from an operator, via the display, wherein the input corresponds to a selection of a corrective action from amongst the one or more corrective actions; and
operate the at least one asset at a first set point based on the corrective action, wherein the first set point is different from the set point.

9. The system of claim 8, wherein the processor is further configured to:
receive telemetry data from one or more sensors associated with each of the plurality of assets;
process the telemetry data received from the one or more sensors; and
determine the set point and the emission level associated with each of the plurality of assets.

10. The system of claim 8, wherein the processor is further configured to:
output one or more emission calculations based at least on the emission level associated with each of the plurality of assets, wherein the emission level corresponds to at least one of: a carbon emission level and a greenhouse house gas emission level, and wherein one of the one or more emission calculations corresponds to the correlated emission level;
identify one or more factors associated with the emission level based on the one or more emission calculations, wherein the one or more factors correspond to: the set point of an asset, an age of the asset, a type of material handled by the asset, and a process performed by the asset in the facility; and
determine an impact on overall emissions of the facility based on the one or more factors.

11. The system of claim 8, wherein the processor is further configured to:
identify the one or more corrective actions for the at least one asset of the plurality of assets is based on the correlated emission level and historic emission data associated with the plurality of assets.

12. The system of claim 8, wherein the processor is further configured to:
provide one or more notifications corresponding to the one or more corrective actions, wherein the one or more corrective actions correspond to: modifying an overall throughput of the facility, changing the set point of the at least one asset, replacing the at least one asset, and servicing the at least one asset in the facility; and
render on the display, the emission level associated with the at least one asset.

13. The system of claim 12, wherein the processor is further configured to:
receive from the operator, via the display, a throughput value for the facility;
determine one or more set points for the plurality of assets based on the throughput value;
compute one or more emission levels for the plurality of assets based on the throughput value and the one or more set points; and
render on the display, the one or more set points and the one or more emission levels for the plurality of assets.

14. The system of claim 11, wherein the processor is further configured to:
receive a feedback from the operator corresponding to the one or more corrective actions, wherein the feedback corresponds a modification to the one or more corrective actions based on the operator's knowledge.

15. A non-transitory, computer-readable storage medium having stored thereon executable instructions that, when executed by one or more processors, cause the one or more processors to:
identify a set point at which each asset of a plurality of assets is operating in the facility;
determine an emission level associated with the each asset operating at the set point;
correlate the emission level associated with each of the plurality of assets;
determine if the correlated emission level exceeds a predefined threshold;
in response to determining that the correlated emission level exceeds the predefined threshold, identify one or more corrective actions for at least one asset of the plurality of assets;
render, on a display, the one or more corrective actions for the at least one asset;
receive an input from an operator, via the display, wherein the input corresponds to a selection of a corrective action from amongst the one or more corrective actions; and
operate the at least one asset at a first set point based on the corrective action, wherein the first set point is different from the set point.
